# EUROPÄISCHE PATENTSCHRIFT

(11) **EP 0 588 174 B1**
(45) Veröffentlichungstag und Bekanntmachung des Hinweises auf die Patenterteilung: **15.11.1995**
(21) Anmeldenummer: 93114069.3
(22) Anmeldetag: 02.09.1993
(51) Int. Cl.: H02G 5/06

(54) **Leitungskanal zur Verlegung von isolierten elektrischen Leitungen**
Cable tray for placing isolated electrical conductors
Canal de câblage pour placer des câbles conducteurs électriques isolés

(30) Priorität: 15.09.1992 DE 4230771
(43) Veröffentlichungstag der Anmeldung: 23.03.1994
(73) Patentinhaber: Daimler-Benz Aerospace Airbus Gesellschaft mit beschränkter Haftung, 21129 Hamburg (DE)
(72) Erfinder: Kirma, Safa, D-22880 Wedel (DE); Paul, Gundolf, D-25474 Bönningstedt (DE)
(74) Vertreter: Hansmann, Dierk, Dipl.-Ing.

(56) Entgegenhaltungen:
- EP-A- 0 184 931
- EP-A- 0 379 722
- US-A- 3 804 970

## Beschreibung

Die Erfindung bezieht sich auf einen Leitungskanal zur Verlegung von isolierten elektrischen Leitungen in Luft- und Raumfahrzeugen. Sie ist weitestgehend zur Verlegung dieser Leitungen, insbesondere von Hilfs- und Steuerleitungen in Leitungskanälen nutzbar. Mit dem Leitungskanal ist die Integration zu einem multivalent einsetzbaren Leitungskanalsystem möglich. Er gestattet eine zweckmäßige und rationelle Verlegetechnologie der Leitungen in der Elektroinstallation.

Es sind verschiedene Lösungen bekannt, die in der elektrotechnischen Montage die Verlegung von Kabeln und Leitungen mit Hilfe von Kabel- bzw. Leitungskanälen technologisch ermöglichen. So ist es, wie von Albert Hoppner im Handbuch für Planung, Konstruktion und Montage von Schaltanlagen; Herausgeber Brown, Boveri & Cie Aktiengesellschaft Mannheim im Verlag W. Girardet, Essen; 3., neubearbeitete Auflage, 1965 auf Seite 550 vorgestellt, im allgemein üblich, daß in elektrotechnischen Ausrüstungen, die beispielsweise im Industrieanlagenbau zur elektrotechnischen Steuerung von Prozessen eingesetzt sind, die Leitungen fast durchweg nach Anschlußtabellen in Kanälen verlegt sind. Es gibt die Verlegung in aufgebauten Kunststoff- oder in versenkten Leitungskanälen. Letztere gestatten, eine große Zahl von Leitungen unterzubringen, während die Kunststoffkanäle über einen gewissen Füllfaktor nicht hinaus kommen. Im gleichen Handbuch ist auf Seite 711 ein Leitungskanal aus Kunststoff abgebildet. Diese traditionellen Lösungen besitzen den Nachteil, daß sie nicht multivalent einsetzbar sind, wobei die ungenügende Kombinations- und Erweiterungsfähigkeit der einzelnen Kanalsegmente zu einem integrierten Kanalsystem nicht befriedigt. Die EP 0 184 931 B1 stellt ein Kabelleitungssystem vor, das aus mehreren zusammenfügbaren Leitungselementen besteht. In diese Leitungselemente sind mehrere Kanäle eingebracht, die zur Aufnahme diverser Leitungen dienen. Als Nachteil erweist sich bei dieser Lösung, daß mit dem Zusammenfügen der Leitungselemente zu einem integrierten Verbund immer Elemente mit gleicher Anzahl von eingefügten Kanälen einzusetzen sind. Es bietet sich keine Möglichkeit der Variation der Anzahl der Kanäle an. Die Leitungselemente besitzen außerdem eine gewisse Biegesteifheit, die deren Einsatz in Grenzen hält. Ihre Befestigung an der Struktur ist ebenfalls sehr aufwendig gelöst, wobei nur eine Einzelbefestigung bei gleichzeitiger Fluchtung der Einzelteile möglich ist. Sie erfolgt mit einem Element, das im Befestigungszustand an der Struktur über eine Bolzenverbindung mittels eines Verriegelungs- und Rückhaltegliedes die Kabel in den Kanälen als auch die Leitungselemente fixiert.

Gleichzeitig sind zusätzliche Maßnahmen erforderlich, um die Kabel in den Kanälen korrekt zu fixieren, wobei außerdem den Betriebseigenschaften derselben zusätzlich erhöhte Beachtung zu widmen ist. Das gilt nach Hoppner (vgl. Seite 863 des bereits genannten Handbuches) insbesondere bezüglich der Wärmeabfuhr, die sich im Betriebszustand einstellt, und dem Schutz der Leitungen gegen mechanische Beschädigung. Die zulässige Belastung der Kabel bzw. Leitungen und deren Schutz gegen elektrische Gefährdungen außerhalb des Kanalsystems ist sachbezogen zu berücksichtigen und unzureichend gelöst. Die EP 0 380 529 B1 stellt eine weitere Lösung vor, die mit den Darlegungen bezüglich der bereits erwähnten Leitungskanäle in Korrelation steht. Das lösungsbezogene rechteckige Trägerelement mit einem U- förmigen Kanalquerschnitt besitzt entlang der Längskanten des offenen Querschnittes eine Innenbiegung. Mit ihm ist eine Integration mehrerer Trägerelemente zu einem Kanalsystem möglich, allerdings ist dann nur dessen geradliniger Verlauf realisierbar. Nachteilig ist ebenso bei dieser Lösung, daß ohne geeignete Befestigungsmöglichkeiten, die nicht offenbart sind, das vorgestellte Kanalsystem sehr labil einzustufen ist. Außerdem schuldet die Lösung geeignete Mittel zur korrekten Fixierung der zu verlegenden Leitungen, wobei zur Minderung seiner systembezogenen Labilität ein wandstärkebezogen stärkeres Material einzusetzen ist. Somit stellt sich ein intensiver Materialeinsatz bei der Realisierung dieses Leitungskanales ein, wobei dessen Einbindung in ein Schutzleitungssystem ebenfalls nicht gegeben ist. Die DR 726 121 stellt im besonderen einen Kanal zur Aufnahme von isolierten elektrischen Leitungen in Luftfahrzeugen vor. In diesem Kanal werden mehrere isolierte elektrische Leitungen in einem entsprechend gestalteten Leitungskanal verlegt und fixiert. Die Lösung besitzt den Nachteil, daß sie nicht multivalent einsetzbar ist. Dem Kanal haftet eine ungenügende Kombinations- und Erweiterungsfähigkeit zu weiteren elektrischen Systemen an, wobei der Schutz der Leitungen gegen möglicherweise auftretende Vibrationen ungenügend gelöst ist. Die DE 39 37 371 beschreibt im wesentlichen einen Leitungskanal zur Verlegung von isolierten elektrischen Leitungen, der möglicherweise auch in Luft- und Raumfahrzeugen einsetzbar ist. Der Kanal besteht aus mehreren Metall- oder Kunztstoffkörpern, die mit geeigneten Mitteln an einer Trägerstruktur fixier- und befestigbar sind. Alle Körper besitzen entlang ihrer Längsrichtung ein durchgängiges Hohlprofil, wobei sie parallel zur Aufnahmerichtung der Leitungen in einzelne Segmente unterteilt sind. Die Körper weisen oberhalb eine durch einen Deckel verschließbare Öffnung auf, wobei mit ihnen eine Masseanbindung vorgesehen ist. Die Lösung der FR 1.456.915 zeigt ebenfalls einen derartigen Körper mit einem Längsschlitz entlang seiner Körperlänge, dessen offenen Querschnitt durch ein klemmbares Profil den Körper verschließt.

Die Führung mehrerer Kabel in isolierten Leitungsrohren ist lösungsgemäß in der US 3,804,970 beschrieben. Die Kabelrohre sind dort mittels entsprechender Kabelhalter, in denen die einzelnen Kabel liegen, fixiert und befestigt; wobei konisch einspannende Endverschlüsse den Verbund der Rohre ermöglichen. Bei diesen zuletzt genannten Lösungen erfolgt gegenüber den isolierten elektrischen Leitungen kein ausreichender Schutz gegen möglicherweise auftretende Vibrationen, denen ein Kanal, beispielsweise in einem Flugzeug, ausgesetzt ist. Die Masseverbindung des Kanals zu einem bestehenden Schutzleitungssystem ist ebenso nicht optimal gelöst, wobei eine kanalseitige Anschlußmöglichkeit zu anderen elektrischen Systemen gänzlich fehlt.

Demgemäß liegt der Erfindung die Aufgabe zugrunde, einen gattungsgemäßen Leitungskanal derart auszubilden, daß mit ihm eine korrekte Fixierung der in den Kanal einzubringenden isolierten elektrischen Leitungen erfolgt. Es ist somit ein Leitungskanal zu schaffen, der die Leitungen besonders gut gegen Vibration und gegen mechanische Beschädigungen schützt und gleichzeitig für eine verbesserte Erdung zum Schutz gegen elektrische Gefährdungen sorgt.

Diese Aufgabe wird für einen Leitungskanal zur Verlegung von isolierten elektrischen Leitungen in Luft- und Raumfahrzeugen, bei dem verschiedene Mittel zur Fixierung und Befestigung des Kanals vorgesehen sind, der aus einem leitfähigen Material besteht und eine Masseverbindung vorgesehen ist, dadurch gelöst, daß der Kanal einen Längsschlitz aufweist, daß der Längsschlitz durch ein Klemmprofil, das im Querschnitt aus einer an einem Hohlprofil sich über die Gesamtlänge des Kanals erstreckenden anliegenden Halteleiste und einem in deren Querschnitt eingeschlossenen elastisch formbaren Füllkörper besteht, wobei die Halteleiste mit den freien Enden der Außenwandung des offenen Querschnittes klemmt, daß die Innenwandung des Kanals mit einem Scheuerschutz versehen ist, daß an den in Längsrichtung liegenden Enden des Kanals mindestens ein Übergangsstück und eine Zugentlastung aufnehmbar ist, daß mindestens eine Massehalterung der Zugentlastung vorgeordnet ist und zwischen den Massehalterungen ein oder mehrere Abstandhalter angeordnet sind, daß das Übergangsstück zur Aufnahme von elektrisch isolierten Leitungen geeignet ist und in das Hohlprofil hineinragt, daß die isolierten elektrischen Leitungen separat in einem Schlauch, der vorzugsweise geflechtartig ist und einen zusätzlichen Scheuerschutz gewährt, geführt sind, daß mit dem Übergangsstück die Masseverbindung zu einem weiteren Schutzleitungssystem oder der Anschluß zu anderen elektrischen Systemen realisiert ist, daß bei den verschiedenen Mitteln zur Fixierung und Befestigung des Hohlprofiles eine Aufnahme für einen Kabelbinder vorgesehen und eine rohrförmige Schelle mit einem angepaßten Formteil, vorzugsweise mit dem Elastomereinsatz, angeordnet ist, daß mehrere Hohlprofile, die horizontal im definierten Abstand zueinander angeordnet sind, mit ihrer Außenwandung an einem metallenen Flachprofil und an ihren gemeinsamen außenwandigen Berührungspunkten mit einer Schweißverbindung befestigt sind.

Die offenen Enden des Hohlprofiles sind durch ein leitfähiges Profil, das eine dünne Wandung besitzt und über ein elastisches Formänderungsvermögen verfügt, geschlossen. Das leitfähige Profil ist ein C- förmiges Flachprofil mit ein oder mehrere Rillen, die mit den rillenartigen Vertiefungen der Seitenflächen der Halteleiste deckungsgleich sind und sich diesen anschmiegen. Das leitfähige Profil paßt sich der Form der Halteleiste an und stimmt mit dem eingesetzten Material des Hohlprofiles überein. Es kontaktiert mit der Halteleiste und dem Hohlprofil elektrisch leitfähig.

Das Hohlprofil ist aus einem oberflächenbehandelten Blech mit verchromter oder verzinkter oder verkadmierter oder vernickelter oder versilberter oder vergoldeter Oberfläche oder aus einer Kupfer- oder Aluminiumlegierung oder aus einem anodisierten Aluminium oder einer anodisierten Aluminiumlegierung realisiert.

Das Klemmprofil ist als leitfähige Kunststoff- Metall- Kombination oder aus einem leitfähigen Gummimaterial, denen leitfähige Partikel, vorzugsweise Gold oder Silber oder Kupfer oder Aluminium oder Nickel oder Eisen, zugesetzt sind, realisierbar, wobei die Oberfläche des Klemmprofiles mit einer leitfähigen Schicht aus Gold oder Silber oder Kupfer oder Kobald oder Chrom oder Indium oder Rhodium oder Tellur oder Tantal oder Chrom- Nickel oder Eisen- Nickel überzogen ist.

Die Halteleiste ist mit ihren Seitenflächen, die rillenartige, vorzugsweise längsverlaufende, Vertiefungen aufweist, an der Innenwandung des Hohlprofiles anliegend, wobei sie quer verlaufenden Durchbrüche aufweist und aus einem elektrisch leitfähigen Kunststoff oder Gummi besteht, der wenigstens an seiner Oberfläche elektrisch leitfähig ist.

Der Füllkörper, der aus Schaum- oder Moosgummi oder Kunststoff besteht, ist als Voll- oder Hohlquerschnitt ausgebildet, wobei er den Raum in der Halteleiste ausfüllt und mit letzterer bei deren Anpassung an die innere Wandung des Hohlprofiles die isolierten elektrischen Leitungen im Hohlprofil fixiert.

Der Scheuerschutz ist durch eine in das Hohlprofil einsetzbare Auskleidung, die aus einer Kunststoffbeschichtung oder einer gummielastischen Beschichtung oder einer gewebeartigen Beschichtung besteht, realisiert.

Das Übergangsstück besteht aus zwei verschiedenen Klemmteilen aus einem Eisen- oder Eisengußwerkstoff oder aus einem Bunt- oder Leichtmetall oder aus einem leit- oder nichtleitfähigen Kunststoff, die beide eine Aufnahme für das Hohlprofil aufweisen und mit einer Schraubverbindung fixiert sind, wobei das obere Klemmteil ein Vorsprungelement aufweist, das in die Öffnung des Hohlprofiles hineinragt und am oberen Klemmteil ein Haltewinkel angeformt ist, der zur Befestigung der Durchführung des weiteren Schutzleitungssystems oder des anderen elektrischen Systems vorgesehen ist.

Die Zugentlastung ist aus einer Stützbuchse, die aus einer oberen Halbschale und einer unteren Halbschale aus einem metallischen Werkstoff besteht und eine leitfähige Verbindung mit dem Hohlprofil besitzt, einem Elastomereinsatz, der aus einer Gummimuffe besteht, und einem Spannelement, das aus einer vorzugsweise rohrförmig geformten und durch eine Schraubverbindung befestigten Schelle besteht, zusammengesetzt, wobei der Elastomereinsatz die mit dem Schlauch ummantelten isolierten elektrischen Leitungen umgibt und diese Anordnung in die Stützbuchse eingeführt und mittels des Spannelementes am Hohlprofil fixiert und befestigt ist.

Die Massehalterung besteht jeweils aus mindestens zwei Klemmteilen und der Abstandhalter besteht jeweils aus zwei Klemmteilen, wobei die Massehalterung aus einem Eisen- oder Eisengußwerkstoff oder aus einem Bunt- oder Leichtmetall oder aus einem leitfähigen Kunststoff und der Abstandhalter aus einem Kunststoff realisiert sind.

Die durch die Erfindung erreichten Vorteile sind im wesentlichen darin zu sehen, daß der Leitungskanal sich zu einem multivalent einsetzbaren Leitungskanalsystem zusammenfügen läßt. Er schützt die isolierten elektrischen Leitungen gut gegen Vibration und sorgt gleichzeitig für eine gute Erdung des Kanales gegen auftretende elektrische Gefährdungen. Die Leitungen sind außerdem gut gegen mechanische Beschädigungen geschützt. Dieses System ist im breiten Spektrum der Elektroinstallation, aber insbesondere im Luft- und Raumfahrzeugbau, anwendbar.

Vorteilhafte Ausgestaltungen der Erfindung sind in den Ansprüchen 2 bis 10 angegeben.So bietet die vielfältige Gestaltung der körpermäßigen Form des geometrischen Körpers bzw. der querschnittsmäßigen Form des Hohlprofiles die Möglichkeit, eine variabele Anzahl von isolierten elektrischen Leitungen mit hohem Füllfaktor im Kanalsystem zu verlegen. Die äußere Gestalt des Leitungskanales läßt eine optimalere Anpassung an die örtlichen Bedingungen des der Installation zur Verfügung stehenden Raumes zu. Die geeignete Befestigung und Fixierung des Leitungskanales mit und in den diversen Mitteln bzw. Halterungen in der dort angegebenen Gestalt ist insofern mit eingeschlossen. Der lösungsgemäße Einsatz von oberflächenbehandeltem Blech oder Legierungen aus Kupfer bzw. Aluminium für das Hohlprofil beugt verstärkt auftretenden Korrosionen und Scheuereinwirkungen vor. Eine dünnwandige Realisierung des Hohlprofiles setzt die Forderung nach einer materialsparenden Leichtbauweise praxiswirksam um. Die Auskleidung des Hohlprofiles mit einem Scheuerschutz mindert die Gefahr der unbeabsichtigten Beschädigung der Leitungen durch äußere Einflüsse. Insofern ist auch die separate Führung der Leitungen in einem geflechtartigen Schlauch vorteilhaft einzuordnen. Die materialmäßige Gestaltung und Formung der Halteleiste bzw. des Klemmprofiles trägt den Gesichtspunkten einer vorteilhaften Schließung des Hohlprofiles bzw. der geeigneten Abdeckung der im Hohlprofil befindlichen isolierten elektrischen Leitungen weitestgehend Rechnung. Ihr formdichter und weitestgehend wandiger schmiegsamer elastischer Sitz an der Innenwandung des Hohlprofiles und ihre Leitfähigkeit sichert einen Schutz gegen unliebsames Eindringen von Feuchtigkeit und Verschmutzung oder sonstiger Fremdkörper sowie gegen zufälliges Berühren der Leitungen. Auf Grund ihrer möglicherweise gegebenen Leitfähigkeit ist eine Kontaktierung mit dem Hohlprofil unter Vermeidung hoher Übergangswiderstände vorhanden, wodurch eine günstige Einbeziehung in die Schutzmaßnahme Erdung gegen elektrische Gefährdungen außerhalb des Leitungskanalsystems gegeben ist. Der Füllkörper, der den Hohlraum in der Halteleiste ganz oder teilweise ausfüllt, dient bei der Anpassung der Halteleiste bzw. des Klemmprofiles an die innere Wandung des Hohlprofiles einer sicheren Fixierung der Leitungen im Leitungskanal und unterstützt die durchgängige Leichtbauweise des Kanals.

Über das Hohlprofil mit innerhalb angeordneter Halteleiste ist vorteilhafterweise ein leitfähiges Profil, das die offenen Enden des Hohlprofiles schließt, als ein zusätzlicher Schutz gegen äußere Einflüsse einrüstbar. Begründet durch dessen elastische Anpassung an die Form der Halteleiste und dessen Leitfähigkeit ist der Schutz gegen elektrische Gefährdungen gewährleistet. Das Einbringen der Übergangsstücke in das Hohlprofil ermöglicht vorteilhafterweise die zusätzliche Einbindung an ein weiteres Schutzleitungssystem oder die Verbindung zu einem anderen elektrischen System. Die Enden des Kanals sind möglicherweise als Zugentlastung für die isolierten elektrischen Leitungen ausgebildet. Mit ihr ist ein vorteilhaftes Zentrieren der isolierten elektrischen Leitungen im Hohlprofil an dessen Enden gewährleistet.Das Biegen des Hohlprofiles bei einer erforderlichen Richtungsänderung des zu verlegenden Leitungskanales wirkt sich sehr vorteilhaft bei der Installation und Montage aus. Die Realisierung der Halterungen und Übergangsstücke als Schweißkonstruktionsteil gestattet mit diesen eine günstigere Montage aufgrund der vormontierten Einbauweise; die Stabilität des Leitungskanales bzw. Leitungskanalsystems erfährt außerdem eine zusätzliche Festigung. Die Realisierung der Anordnung der Hohlprofile gestattet die vorteilhafte Nutzung der Schweißverbindungs- und befestigungstechnologie. Mit dieser Befestigung der Hohlprofile wirken die genannten gleichen Vorteile für fixierbare Schweißkonstruktionsteile.

Die Erfindung ist anhand der Zeichnungen dargestellt und in den Ausführungsbeispielen näher beschrieben. Es zeigen
- Fig.1: die erfindungsgemäße Anordnung mit den dargestellten Masse- und Abstandhalterungen sowie Zugentlastungen;
- Fig.2: den Leitungskanal ohne Klemmteile;
- Fig.3: die Halterung (Leitungskanal mit Spreiznietbefestigung der Klemmteile an einer Struktur);
- Fig.3a: die modifizierte Anordnung nach Fig.2 und 3;
- Fig.4: die modifizierte Anordnung nach Fig.3;
- Fig.5: die modifizierte Anordnung nach Fig.2;
- Fig.6: die modifizierte Anordnung nach Fig.5 mit dargestelltem leitfähigen und die Halteleiste umgebenen Mantel;
- Fig.7: die modifizierte Anordnung nach Fig.3 mit der Anordnung nach Fig.5;
- Fig.8: die modifizierte Anordnung nach Fig.3 mit einer querschnittsmäßig größeren Anordnung nach Fig.2 und mit Aussparungen im unteren Klemmteil;
- Fig.9: die modifizierte Anordnung nach Fig.3 mit modifizierter Anordnung nach Fig.26;
- Fig.10: die Massehalterung nach Fig.9 mit geschraubten Klemmteilen;
- Fig.11: die Zugentlastung im Schnitt nach Fig.10;
- Fig.12: die Zugentlastung im Schnitt nach Fig.14;
- Fig.13: die modifizierte Zugentlastung nach Fig.11;
- Fig.14: die modifizierte Anordnung nach Fig.3 mit geschraubten Klemmteilen;
- Fig.15: das Übergangsstück mit geschraubten Klemmteilen;
- Fig.16: die modifizierte Anordnung nach Fig.18;
- Fig.17: zwei Übergangsstücke mit geschraubten Klemmteilen;
- Fig.18: die Anordnung nach Fig.5 mit Kabelbinder;
- Fig.19: zwei Hohlprofildoppelanordnungen mit Befestigung an einer Struktur mittels Schelle und Schraubverbindung;
- Fig.20: die Hohlprofilanordnung mit einer Kabelbinderbefestigung in einer unteren Halbschale mit Spreiznietbefestigung derselben an eine Struktur;
- Fig.20a: die modifizierte Anordnung nach Fig.3 mit einer an die beiden Klemmmteile angebrachten Klippverriegelung und Befestigung des unteren Klemmteiles mit Spreiznietverbindung an einer Struktur;
- Fig.21: die Massehalterung nach Fig.3 mit Stützbuchse und Befestigung der beiden Halbschalen mittels Schraubverbindung an einer Struktur;
- Fig.22: die modifizierte Anordnung nach Fig. 17 mit einem Übergangsstück;
- Fig.23: die modifizierte Anordnung nach Fig.9 mit zwei Übergangsstücken;
- Fig.23a: die Anordnung nach Fig.23 mit einem Übergangsstück;
- Fig.24: die modifizierte Anordnung nach Fig.3 mit der Anordnung nach Fig.5 und drei an einer Struktur befestigten Klemmteilen mittels Spreiznietverbindung;
- Fig.25: die modifizierte Anordnung nach Fig.26 mit U- förmiger Gestaltung der freien Enden des offenen Hohlprofiles;
- Fig.25a: die modifizierte Anordnung nach Fig.26 mit V- angelehnter Gestaltung der freien Enden des offenen Hohlprofiles;
- Fig.26: das offene Hohlprofil mit I- förmiger Gestaltung seiner freien Enden und geflechtartiger Ummantelung der in diesem angeordneten gebündelten isolierten elektrischen Leitungen;
- Fig.26a: die modifizierte Anordnung nach Fig.26 mit C- förmiger Gestaltung der freien Enden des offenen Hohlprofiles;
- Fig.27: die Massehalterung nach Fig.3 mit separater Fixierung der einzelnen Hohlprofile an einem durch das untere Klemmteil durchgeführten Schweißbolzens und Befestigung der Klemmteile mittels Spreiznietverbindung;
- Fig.28: die modifizierte Anordnung nach Fig.2 mit dargestelltem leitfähigen und die Halteleiste umgebenden Mantel;
- Fig.29: separate Fixierung einer Mehrfachanordnung nach Fig.2 an einem geschweißten U- Profil und Befestigung desselben über Distanzstücke mittels Spreiznietverbindung an einer Struktur;
- Fig.30: die modifizierte Anordnung nach Fig.29 mit Schraubbefestigung;
- Fig.31: die modifizierte Anordnung mit Befestigung eines am Haltewinkel des Übergangsstückes nach Fig.30 fixierten Winkelprofiles;
- Fig.32: die modifizierte Anordnung nach Fig.31 mit Befestigung zweier Übergangsstücke am Haltewinkel;
- Fig.33: die modifizierte Anordnung nach Fig.30;
- Fig.34: die modifizierte Anordnung nach Fig.33 mit einer querschnittsmäßig größeren Anordnung nach Fig.2;
- Fig.35: die modifizierte Anordnung nach Fig.15 mit Zusammenhaltung der Klemmteile durch ein Spannband;
- Fig.36: die modifizierte Anordnung nach Fig.35 mit Verschraubung der beiden Enden des Flachprofiles;
- Fig.37: die modifizierte Anordnung nach Fig.23 mit Verschraubung der Enden des die Klemmteile zusammenhaltenden Flachprofiles;
- Fig.38: die modifizierte Anordnung nach Fig.30 oder Fig.33 mit Schweißbefestigung der Hohlprofile an einem Flachprofil und gegenseitig;
- Fig.39: die modifizierte Anordnung nach Fig.38 mit Befestigung der Hohlprofile mittels Punktschweißung.

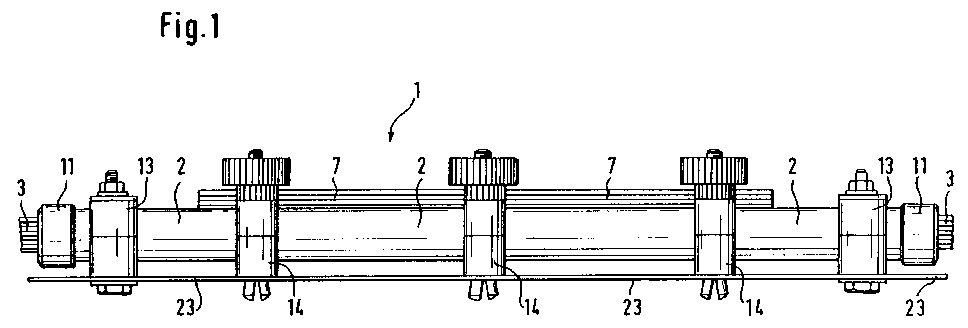

An einem Ausführungsbeispiel soll die erfindungsgemäße Anordnung näher erläutert werden. In der Fig.1 ist ein Leitungskanalsystem zur Verlegung isolierter elektrischer Leitungen 3 in seinem grundsätzlichen Aufbau dargestellt.

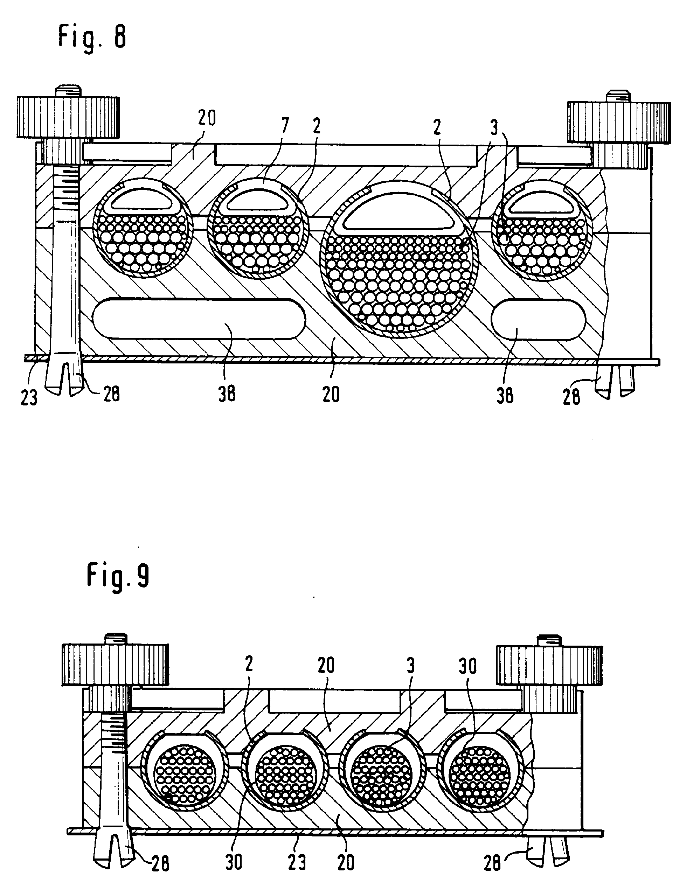

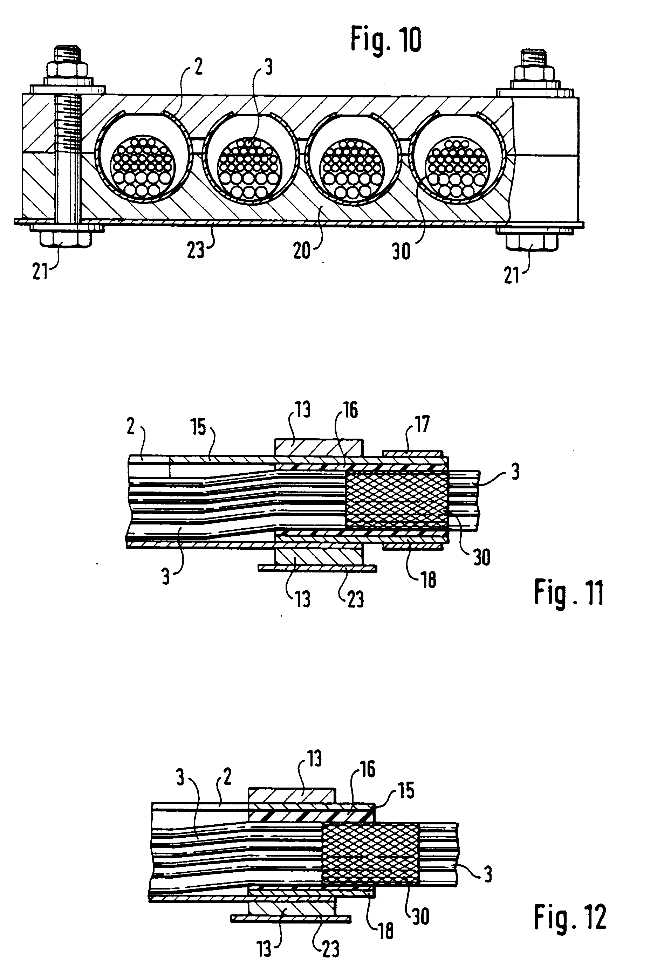

Es besteht aus einem Hohlprofil 2 endlicher Länge, das mittels Halterungen 13, 14 (mit ihrem grundsätzlichen querschnittsmäßigen Aufbau nach Fig.10 und Fig.9) an einer Struktur 23 befestigt ist. Das Hohlprofil 2 ist in diesen Halterungen 13, 14 angeordnet. Es kann die Gestalt eines quader- oder zylinder- oder prisma- oder kreisringförmigen Körpers besitzen. Im Hohlprofil 2 befinden sich die genannten Leitungen 3, die an den in Längsrichtung liegenden Enden desselben möglicherweise von einer Zugentlastung 11 abgefangen sind. Je eine Massehalterung 13 ist diesen Zugentlastungen 11 an den Enden vorgeordnet. Zwischen diesen Massehalterungen 13 befinden sich über die gestreckte Länge des Hohlprofiles 2 verteilt mehrere Abstandhalter 14 . Die Halterungen 13 und 14 geben dem Leitungskanalsystem zusätzlich genügend Stabilität mit ihrer strukturellen Befestigung an einer beispielsweise vorhandenen Struktur 23. Die Anordnung mehrerer Hohlprofile 2 zu einem Leitungskanalsystem ist möglich, wobei diese Hohlprofile 2 entlang ihrer gestreckten Länge und in einem Abstand, der definitiv zwischen ihren zueinander nächstliegenden Mantellinien liegt, angeordnet sind. Das Hohlprofil 2 besteht aus einem elektrisch leitfähigen Material, dessen Auswahl unter Berücksichtigung seiner konstruktiven Dimensionierung erfolgt. Letzteres ist über die aus elektrisch leitfähigem Material bestehende Massehalterung 13 mit einem Schutzleitungssystem, hier ein Blitzschutzsystem, elektrisch leitend verbunden.

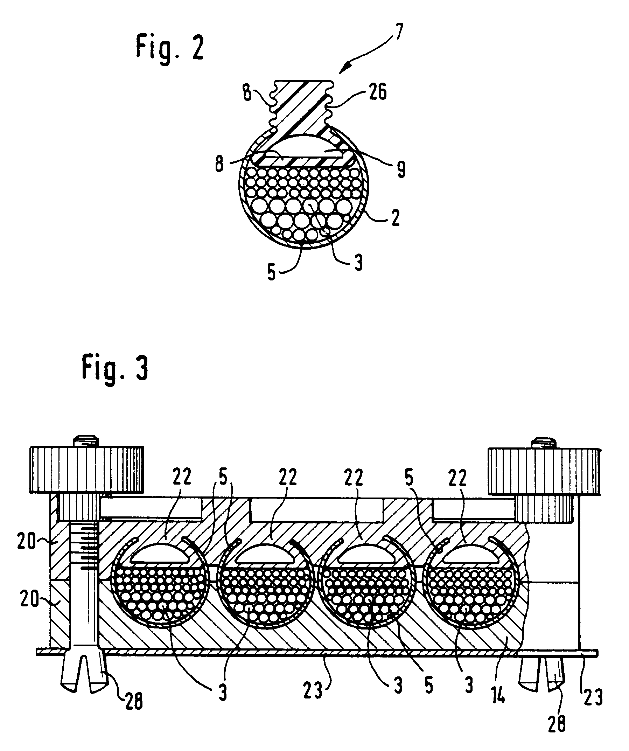

Das Hohlprofil 2 ist in Fig.2 mit einem Klemmprofil 7, das aus der Halteleiste 8 und einem Füllkörper 9 besteht, querschnittsmäßig dargestellt. Es ist ein durchgängiges Hohlprofil 2, daß entlang seiner Längsrichtung verschiedene Raumformen, vorzugsweise mit einem quadratischen oder rechteckigen oder trapezförmigen oder ellipsenförmigen Querschnitt aufweist, wobei die kreisförmige Querschnittsform den Vorzug erhält. Es bildet infolge eines (in der Fig.2 nicht dargestellten) eingebrachten Längsschlitzes 6 entlang seines Mantellinienverlaufes einen offenen Querschnitt, durch den die Aufnahme der erwähnten Leitungen 3 bei der Montage erfolgt. Der Querschnitt des Hohlprofiles 2 soll aus einem elektrisch leitfähigen Material bestehen. Sie kann aus einem Eisen- oder Eisengußwerkstoff oder aus einem Bunt- oder Leichtmetall oder aus einem leitfähigen Kunststoff realisiert sein, wobei vorzugsweise ein metallisierter Kunststoff einzusetzen ist. Das Hohlprofil 2 besteht beispielsweise aus Blech, das vorzugsweise oberflächenbehandelt bzw. oberflächenvergütet ist, oder aus einer Kupfer- oder Aluminiumlegierung. Das oberflächenbehandelte oder -vergütete Material ist möglicherweise verchromt oder verzinkt oder verkadmiert oder vernickelt oder sogar versilbert oder vergoldet.

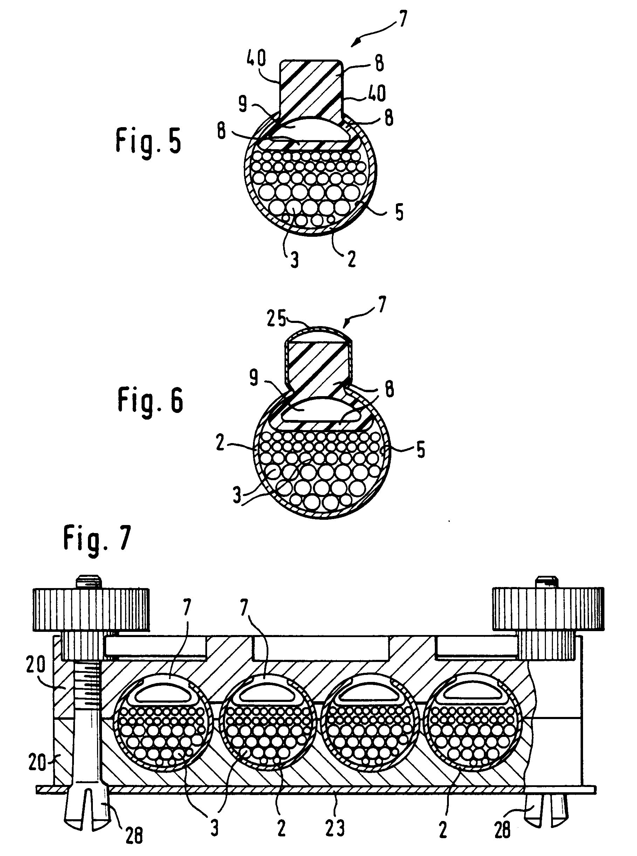

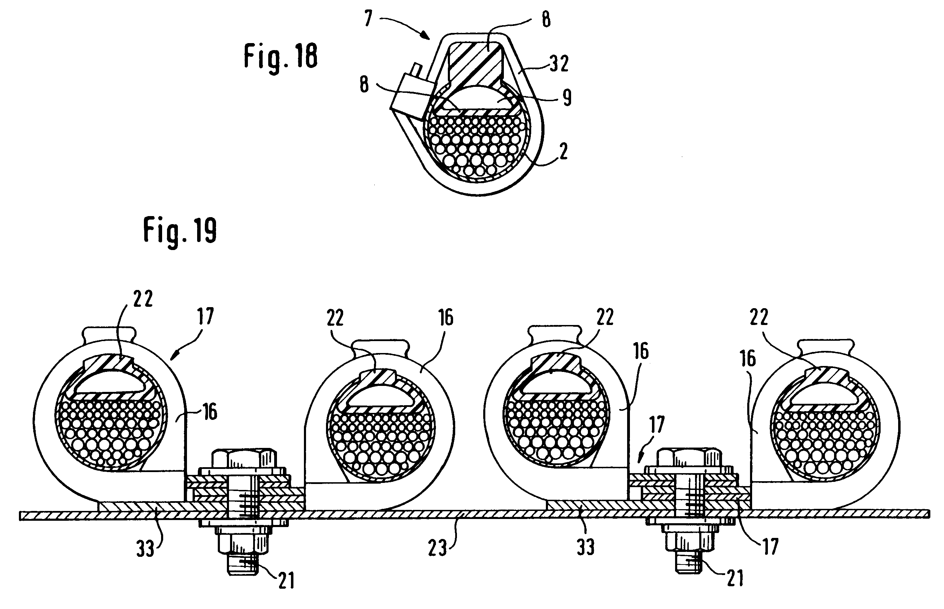

Die Innenwandung des Hohlprofiles 2, die weitestgehend den vieleckig oder kreis- oder ellipsenförmig geformten Querschnitt des Hohlprofiles 2 annimmt, ist mit einem Scheuerschutz gegen die Beschädigung der Leitungen 3 versehen. Letzterer ist durch eine in das Hohlprofil 2 vorgesehene Auskleidung realisierbar. Das Auskleiden der Innenwandung 5 ist mit einer aufgebrachten Kunststoffbeschichtung oder einer aufgebrachten gummielastischen Beschichtung möglich, wobei auch die Auskleidung mit einer gewebe- oder kunststoff- oder gummiartigen Einlage durchaus praktikabel ist. Ergänzend können die isolierten elektrischen Leitungen 3 separat in einen (in der Fig.2 nicht dargestellten) geflechtartigen Schlauch 30 gegen Scheuerwirkung geschützt werden. Das offene Hohlprofil 2 ist entlang des in Fig.2 nicht sichtbaren Längsschlitzes 6 mit einem Klemmprofil 7 verschließbar. Letzteres besteht aus einer Halteleiste 8; in den ein vorwiegend elastisch formbarer Füllkörper 9 eingeschlossen ist, wobei letzterer als Vollquerschnitt ausgebildet sein kann. Dieser Vollquerschnitt kann mit einem Schaum- oder Moosgummi oder Kunststoff realisiert werden. Der Füllkörper 9 soll den Raum in der Halteleiste 8 ganz oder teilweise ausfüllen und im Querschnitt der Halteleiste 8, bei deren Anpassung an die Innenwandung 5 des Hohlprofiles 2, die isolierten elektrischen Leitungen 3 in diesem Hohlprofil 2 fixieren. Die Realisierung der Halteleiste 8 ohne den zusätzlichen Füllkörper 9 ist denkbar, wobei dieser Raum dann durch einen Füllkörper 9 ganz oder teilweise ausgefüllt ist. In dieser Situation nimmt der Hohlquerschnitt den Raum des Füllkörpers 9 ein und befindet sich innerhalb des Querschnittes der Halteleiste 8. Das in den Längsschlitz 6 eingeführte Klemmprofil 7 soll mit seiner Halteleiste 8 am Hohlprofil 2 weitestgehend wandig und schmiegsam anliegen und mit den freien Enden der Außenwandung 5 des offenen Querschnittes des Hohlprofiles 2 Klemmen. Die Seiten- bzw. Mantelflächen der Halteleiste 8 sind zur besseren Haftung an der Innenwandung 5 mit rillenartigen Vertiefungen 26 versehen, die vorzugsweise dem Mantellinienverlauf des Hohlprofiles 2 folgend längsverlaufend in das Gummiprofil der Halteleiste 8 eingearbeitet sind. Diese rillenartigen Vertiefungen 26 sind beispielsweise nach Fig.5 auch durch eine glatte Seiten- bzw. Mantelflächengestaltung ersetzbar und mit einem Kabelbinder 32 nach Fig.18 an einer bestimmten Position des Klemmprofiles 7 fixierbar. Das Klemmprofil 7 kann die Körperform eines Quaders mit rechteckigem oder quadratischem Querschnitt oder ein Prisma oder ein geteiltes Prisma mit trapezförmigem Querschnitt oder ein Prisma mit teilweise kreisbogenförmig abgerundeten Mantelflächen, die eine Zylinderform beschreiben, besitzen. Die bevorzugte Körperform ist in der bereits vorher beschriebenen Art der Raumform des Hohlprofiles 2 angepaßt. Besteht das Klemmprofil 7 aus Kunststoff oder Gummi, so kann dieses elektrisch leitend oder nichtleitend sein.

Im angenommenen Falle seiner Leitfähigkeit soll es dann ergänzenderweise aus einem Verbundmaterial, vorzugsweise aus einer leitfähigen Plast- Metall- Kombination, oder aus dem erwähnten leitfähigen Gummimaterial bestehen. Dem Verbund- oder Gummimaterial sind insofern leitfähige Partikel, vorzugsweise Gold oder Silber oder Kupfer oder Nickel oder Eisen, zuzusetzen. Die Oberfläche dieses Körpers 7 ist dann unter Umständen zusätzlich mit einer leitfähigen Schicht, vorzugsweise aus Gold oder Silber oder Kupfer oder Kobald oder Chrom oder Indium oder Rhodium oder Tellur oder Tantal oder Chrom- Nickel oder Eisen- Nickel zu überziehen.

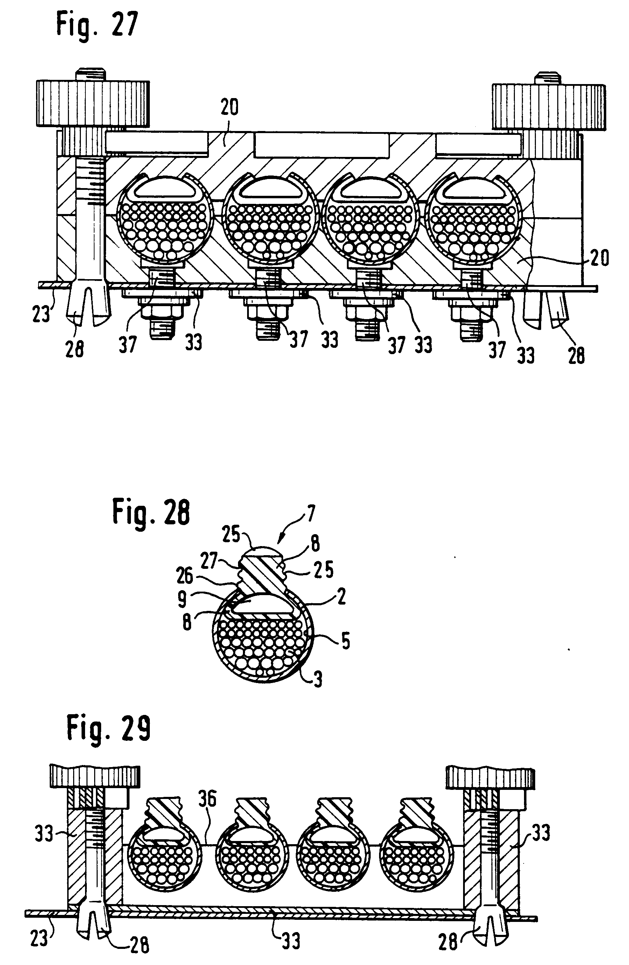

Weitere Modifikationem der Gestaltung des Leitungskanales (ohne die Klemmteile 20) sind aus Fig.6 und Fig.28 ersichtlich. In beiden Ausführungsformen ist zusätzlich ein leitfähiges Profil 25 über die Halteleiste 8 gebracht. Dieses leitfähige Profil 25 besitzt eine dünne Wandung, vorzugsweise eine Wandungsstärke und verfügt über ein elastisches Formänderungsvermögen, wobei mit ihm die offenen Enden des Hohlprofiles 2 geschlossen sind. Es handelt sich hierbei um ein Flachprofil, das mit der Halteleiste 8 und dem Hohlprofil 2 elektrisch leitfähig kontaktiert. Sein Material sollte mit dem eingesetzten Material des Hohlprofiles 2 übereinstimmen. Die Profilform des leitfähigen Profiles 25 soll der Körperform des Klemmprofiles 8 angepaßt sein, wobei eine U-, V-, C- förmige oder I- Form denkbar ist. In das dem Klemmprofil 8 angepaßte leitfähige Profil 25 sind nach Fig.28 gegebenenfalls eine oder mehrere Rillen 27 oder rillenförmige Vertiefungen 26 einzuarbeiten, die mit denen des Klemmprofiles 8 an dessen Mantel- bzw. Seitenflächen deckungsgleich sind und im besonderen sich diesen anschmiegen. Das leitfähige Profil 25 kann im Bedarfsfall mit quer zur Mantellinienrichtung des Hohlprofiles 2 verlaufenden Aussparungen der Außenstruktur der Halteleiste 8 angepaßt.

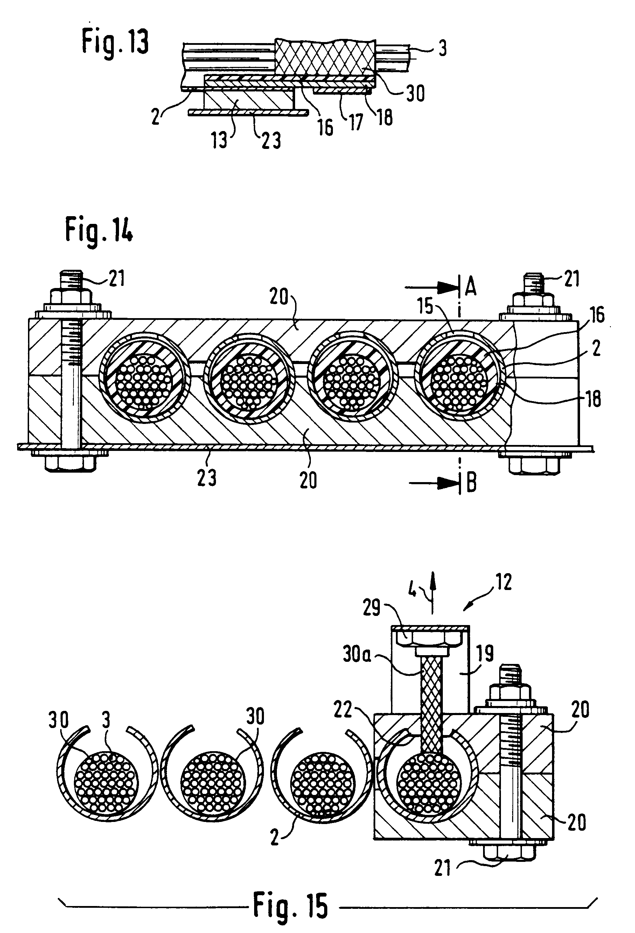

In Fig.15 ist jeweils ein Übergangsstück 12 dargestellt. Letzteres ist zur Aufnahme der mit einem geflechtartigen Schlauch 30a umgebenen abgehenden isolierten elektrischen Leitungen 3 aus dem Hohlprofil 2 durch den Schlitz 6 vorgesehen. Mit ihm kann die Masseverbindung 4 zu einem weiteren Schutzleitungssystem bzw. die Einbindung in die Blitzschutzmaßnahme gegen möglicherweise auftretende elektrische Gefährdungen oder der Anschluß zu anderweitigen elektischen Systemen vollzogen werden. Das Übergangsstück 12 besteht aus zwei verschiedenen Klemmteilen 20, die mit einer Schraubverbindung 21 fixiert sind. Das Ober- und Unterteil 20 weist eine Aufnahme für das Hohlprofil 2 auf.Das Oberteil 20 besitzt jedoch ein Vorsprungelement 22, das in die Öffnung des Hohlprofiles 2 hineinragt. Am Oberteil 20 ist ein Winkel 19 angeformt, der zur Befestigung der Durchführung eines zweiten Systems dienen sollte.

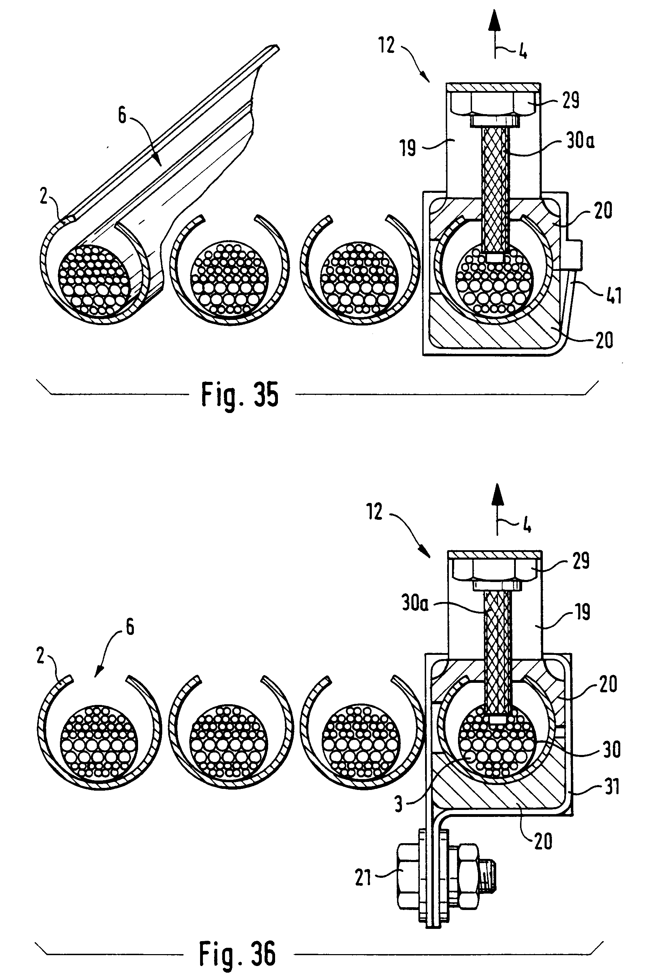

Die Durchführung ist mit einer Verschraubung 29 mittels Mutter am Winkel 19 befestigt. Eine Modifikation dieser Befestigung ist in der Fig.35 und Fig.36 dargestellt. Hier erfolgt das Zusammenhalten dieser beiden Klemmteile 20 durch ein entlang der Seitenflächen anliegendes Spannband, das entweder mit einem Spannelement oder mittels einer verschraubten Schelle 31 befestigt ist.

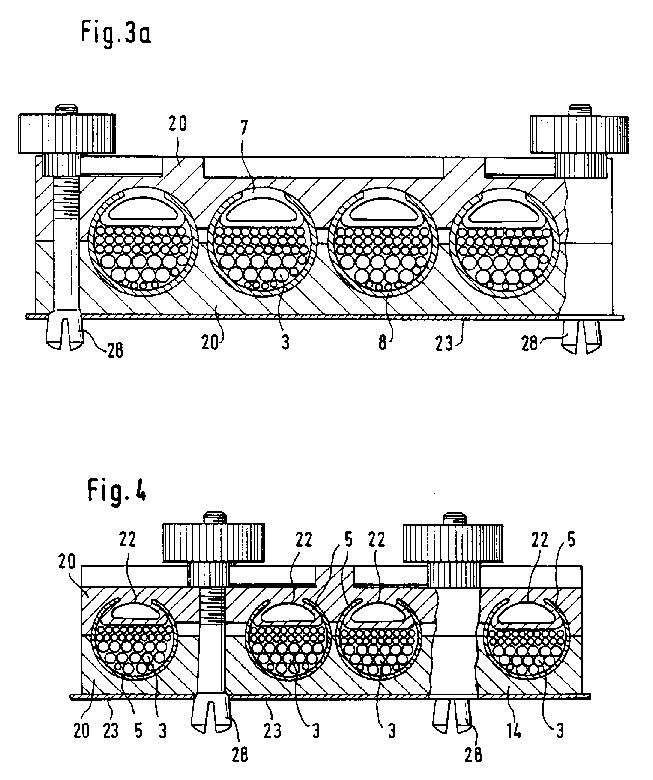

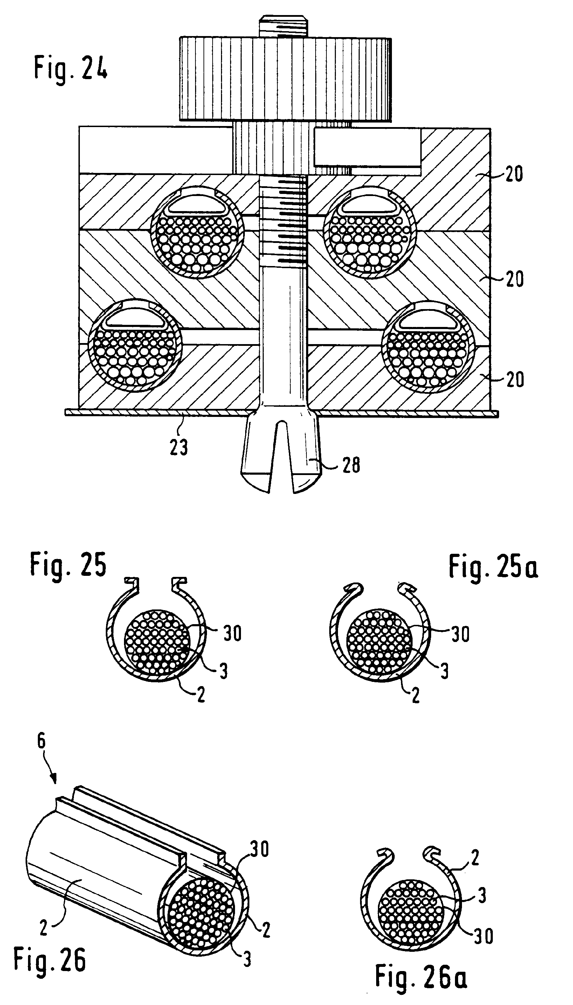

Die Figuren 3, 3a und 4 zeigen eine Darstellung mit vier parallel zueinander angeordneten gleichen Hohlprofilen 2, wobei unterschiedliche Klemmprofile 7 nach Fig.2 und Fig.5 eingesetzt sind. Die Hohlprofile 2 sind durch die Halterungen 13, 14 der Struktur 23 in Position gehalten. Letztere bestehen aus zwei verschiedenen Klemmteilen 20, die mit Aufnehmungen für das Hohlprofil 2 versehen und mehrzählig in einem definierten Abstand zueinander an der Struktur 23 angeordnet sind. Der Einsatz mehrerer Klemmteile 20 ist in der Fig.24 mit anzählig dergleichen dargestellt. Die Befestigung der Halterungen 13 und 14 erfolgt bei der Massehalterung 13 mittels Schraubverbindung 21 und bei dem Abstandhalter 14 mittels Spreizniet 28 an der Struktur 23. Die oberen Klemmteile 20 besitzen Vorsprungelemente 22, die in die Öffnungen der Hohlprofile 2 hineinragen, um so eine ausreichende Einspannung derselben zu gewahrleisten. Die Hohlprofile 2 sind mit den Leitungen 3 so gefüllt, daß das Eindringen möglicherweise vorhandener bzw. das Hohlprofil 2 umgebender elektromagnetischer Felder durch den Längsschlitz 6 nicht störend wirkt. Die Leitungen 3 sind durch das Klemmprofil 7 in der vorher geschilderten Art und Weise durchgehend in Position gehalten. Die Klemmprofile 7 sind in das Hohlprofil 2 hinein zu drücken, wobei diese sich durch ihre hochelastische Eigenschaft, beispielsweise bei Verwendung von Gummiprofil, an der Oberfläche der Isolation der elektrischen Leitungen 3 anpassen. Bei vorhandenen rillenartigen Vertiefungen 26 an der Halteleiste 8 nach Fig.2 soll der Ausgleich verschiedener Leitungsfüllhöhen erreicht werden. Das Klemmprofil 7 kann jeweils vor oder nach einer Halterung 13 oder 14 in deren Abmaßen unterbrochen oder ohne Unterbrechung verlegt werden. Die Innenwandung des Hohlprofiles 2 kann (wie erwähnt) mit einer Kunststoffbeschichtung, die als Scheuerschutz zugunsten der Leitungen 3 dient, ausgestattet sein. Bei einer erforderlichen Richtungsänderung des zu verlegenden Leitungskanales können die Hohlprofile 2 gebogen werden. Das Leitungskanalsystem ist somit ohne größeren Aufwand bei einfacher Montage realisierbar. Bedingt durch eine längere Streckenführung des Leitungskanalsystems sind die Anzahl der Luftspalte zwischen den Hohlprofillängen auf ein Minimum zu reduzieren, um das Eindringen von außen wirkender elektromagnetischer Felder zu minimieren.

Die Fixierung und Befestigung der offenen Hohlprofile 2 mit nach oben gerichteter Öffnung ( Vertikalöffnung), wie in den Figuren dargestellt, genügt der Forderung nach ausreichender Abschirmung gegen diese Felder. Eine zusätzliche Abschottungsmöglichkeit gegen derartige äußere Feldeinflüsse ist durch die Anordnung des leitfähigen Profiles 25 über die Halteleiste 8 mit Schließung der freien Enden des Hohlprofiles 2 nach Fig.6 und Fig.28 in der vorher beschriebenen Form möglich. Der Einsatz einer Halteleiste 8 und die gewollte Kontaktierung mit dem leitfähigen Profil 25 unterstützt die Verbesserung der Abschirmung gegen äußere Einflüsse. Die Halterung der Hohlprofile 2 mittels Abstandhalter 14, deren Klemmteile 20 vorteilhafterweise aus einem Kunststoff bestehen, bzw. Massehalterung 13, deren Klemmteile 20 aus einem leitfähigen Material oder leitfähigem Kunststoff bestehen, erfolgt in einem definierten Abstand zueinander.

Fig. 4 zeigt im besonderen eine Befestigungsform an der Struktur 23, die wenig Platzbedarf benötigt und vorteilhafter für die mechanische Spannungsverteilung auf den Hohlprofilen 2 ist.

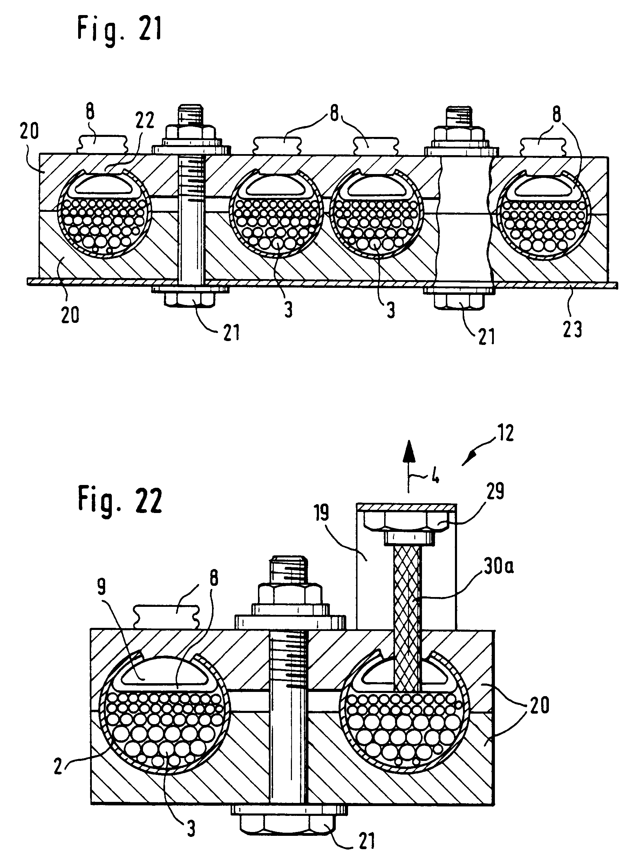

In der Fig.21 ist auch eine Massehalterung 13 nach Fig.4 dargestellt, wobei hier durch Verschrauben der beiden Klemmteile 20 eine Einspannung der Hohlprofile 2 und mit dem unteren Klemmmteil 20 der feste Verbund mit der Struktur 23 erfolgt. Dadurch ist die Anbindung an das bestehende Schutzleitungssystem gegen elektrische Gefährdungen vollzogen.

Fig.7 zeigt eine modifizierte Anordnung nach Fig.3 mit der Anordnung nach Fig.5, wobei die Seiten- bzw. Mantelflächen der Halteleiste 8 glatt gehalten sind.

Die Darstellung in Fig.8 zeigt eine modifizierte Anordnung nach Fig.3, wobei ein Hohlprofil 2 mit großem Querschnitt und drei gleiche Kleinere Querschnitte des Hohlprofiles 2 in die Klemmteile 20 eingespannt sind. Im Unterteil 20 sind zwecks Gewichtserleichterung diverse Aussparungen 38 eingearbeitet.

Die Darstellung in Fig.9 zeigt eine veränderte Leitungsführungsform gegenüber Fig.3, da die isolierten elektrischen Leitungen 3 hier in einem geflechtartigen Schlauch 30, der beispielsweise aus einem Textil- oder kunststoffbeschichtetem Textilgewebe besteht, geführt sind. Der Schlauch 30 ist durch sein Flachdrücken in das offene Hohlprofil 2 einzuführen und zu legen.In diesem Fall ist die Innenwandung 5 des offenen Hohlprofiles 2 nicht mit einer Kunststoffbeschichtung versehen.

Durch diesen Zusammenhalt der Leitungen 3 zu einem Leitungsbündel innerhalb des geflechtartigen Schlauches 30 ist eine träge Masse vorhanden,die die einzelnen Leitungen 3 bei Vibrationen bzw. Erschütterungen beruhigt und das Scheuern der Leitungen wesentlich einschränkt.

In Fig.10 ist eine Massehalterung 13 nach Fig.9 mit geschraubten Klemmteilen 20 dargestellt. Die Klemmteile 20 bestehen hier aus einem Eisen- oder Eisengußwerkstoff oder aus einem Bunt- oder Leichtmetall oder aus einem leitfähigen Kunststoff. Die Anordnung dieser leitfähigen Halterung 13 am Hohlprofil 2 ist aus Fig.1 entnehmbar.

Die Zugentlastung 11 nach Fig.11 setzt sich aus einer Stützbuchse, einem Elastomereinsatz 16 und einem Spannelement 17 zusammen, wobei der Elastomereinsatz 16 in Form einer Gummimuffe die mit dem geflechtartigen Schlauch 30 ummantelten isolierten elektrischen Leitungen 3 umgibt. Diese Anordnung ist in die genannte Stützbuchse, die aus einer oberen Halbschale 15 und einer unteren Halbschale 18 aus einem metallischen Werkstoff besteht und leitfähig mit dem Hohlprofil 2 verbunden ist, einzuführen. Das Spannelement 17 in Gestalt einer Schelle, in der diese Anordnung liegt, fixiert und befestigt dieselbe mittels einer Schraubverbindung am Hohlprofil 2. Ist letzteres ein geschlitztes Rohr, durch dessen Längsschlitz entlang einer Mantellinie sich bequem die Leitungen 3 einbringen lassen, so soll eine rohrförmige Schelle 17 als geeignetes Mittel zur Fixierung und Befestigung mit einem angepaßten Formteil, eben der Gummimuffe als Elastomereinsatz 16, hierbei dienen. Die Leitungen 3 sind an genannten Enden des Hohlprofiles 2 eben durch Halbschalen 15, 18 oder möglicherweise durch eine geschlitzte Muffe aus Metall- oder auch Gummi im erwähnten Rohr 2 zu zentrieren. Eine lange obere Halbschale 15 und eine kürzere untere Halbschale 18 sind hierbei in das Rohr 2 einzusetzen. Beide bilden zusammen eine Stütze für das geschlitzte Rohr mit dem Anpreßdruck bei einer festgezogenen Schraubverbindung durch die Schelle 17. Die obere Halbschale 15 ist deshalb länger gegenüber der unteren Halbschale 18 ausgebildet, da in einem Rohr mit einem maximalen Füllfaktor an Leitungen 3 sich beim Befestigen der vorher genannten Anordnung der Leitungsbund vertikal anhebt. Die obere Halbschale 15 wirkt in dieser Situation als Abschirmdeckel gegenüber dem angehobenen Leitungsbund. Die beiden Halbschalen 15, 18 sind mit der Innenwandung 5 des Rohres elektrisch leitfähig verbunden. Die Gummimuffe 16 dient der Schonung der Leitungen 3 bei Wirkung des Anpreßdruckes mittels Schelle 17, durch die selbige am Ende des Rohres festgehalten werden und somit zugentlastet sind.

Zusätzlich zu dieser Maßnahme kann das geflechtartige Gewebe 30 von den Leitungen 3 abgehoben und über die Außenwandung 5 des Rohres 2 gezogen und mit der Schelle 17 samt der beschriebenen Anordnung befestigt sein. Die einzelnen Leitungen 3 des Leitungsbundes sind durch das stramme Anliegen des Geflechtes 30 zusammengehalten und der Schutz gegen ungewollte Relativbewegungen ist realisiert.

Die Fig.12 zeigt eine Zugentlastung 11 im Schnitt A-B nach der Fig.14; in dieser Ausführungsform ist die Gummimuffe 16 exzentrisch angeordnet, damit das Leitungsbündel nicht vertikal außerhalb des Rohres und nach der gesetzten Schelle 17 angehoben wird. Hier besitzen nunmehr die beiden metallenen Halbschalen 15, 18 die gleiche Länge und das Geflecht 30 eine Überlänge. Der mittels der Halterung nach Fig.14 erzeugte Anpreßdruck bewirkt die Zugentlastung des Leitungsbündels. Eine zusätzliche Schellenbefestigung in der vorher beschriebenen Art ist nicht erforderlich.

Die Darstellung der Zugentlastung 11 nach Fig.13 ist mit der in Fig.11 identisch. Der Unterschied besteht nur in den verschiedenen Längen der metallenen Halbschalen 15, 18 nach Fig.11, wobei diese nach Fig.13 eine gleiche Länge besitzen.

Die Fig.14 zeigt das Ende der vier Hohlpropfile 2 mit einer Massehalterung 13 aus Metall mit Zugentlastung 11. Die Gummimuffen 16, die Halbschalen 15, 18 der Zugentlastungen 11 im Zusammenhang mit den Hohlprofilenden werden mittels einer Schraubverbindung 21 durch die befestigten Klemmteile 20 umklammert werden.

Die Lösungen nach Fig.11 und Fig.13 sind weitestgehend auch für Anordnungen nach den Figuren 3, 4, 7 und 8 ohne Geflecht 30 in modifizierter Form anwendbar.

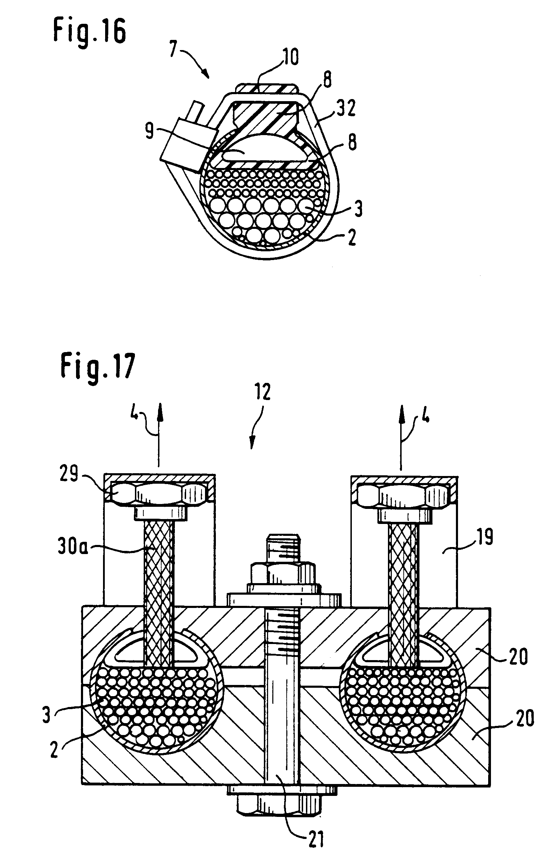

Die Fig.17 zeigt zwei Übergangsstücke 12 mit geschraubten Klemmteilen 20. Die Befestigungsschraube ist hier in der Mitte der Klemmteile 20 zwischen den beiden Hohlprofilen 2 angeordnet.

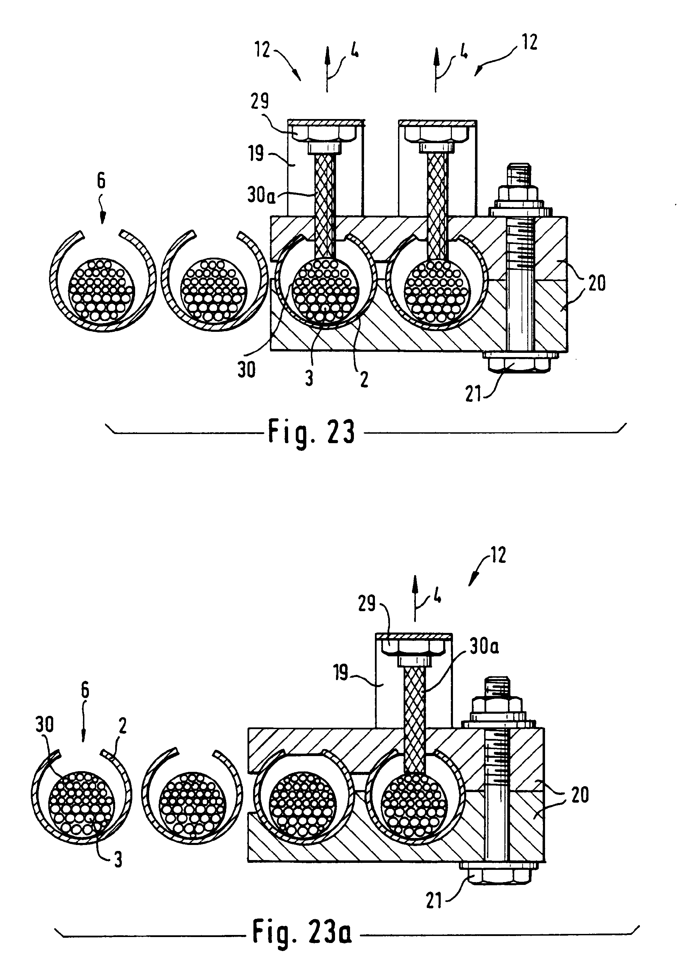

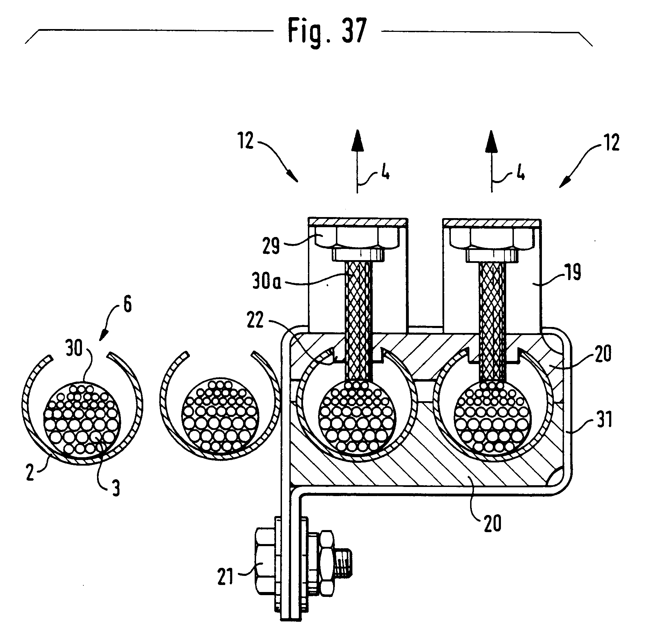

In den Figuren 22, 23, 23a, 31, 32, 37 sind überdies noch weitere modifizierte Formen mit einem oder mehreren Übergangsstücken dargestellt.

Die Fig.18 zeigt eine stufenlose Halteleiste 8. Diese Ausführung gestattet die Befestigung mittels eines Kabelbinders 32 in definierten Abständen am Hohlprofil 2.

Eine ähnliche Anordnung ist in Fig.16 zu dargestellt. Diese zeigt ein Klemmprofil 7 mit einem horizontal eingebrachten Schlitz 10 in die Halteleiste 8. Dieser ist zur Einfädelung eines Kabelbinders 32 vorgesehen, der das Klemmprofil 7 in einer Position hält.

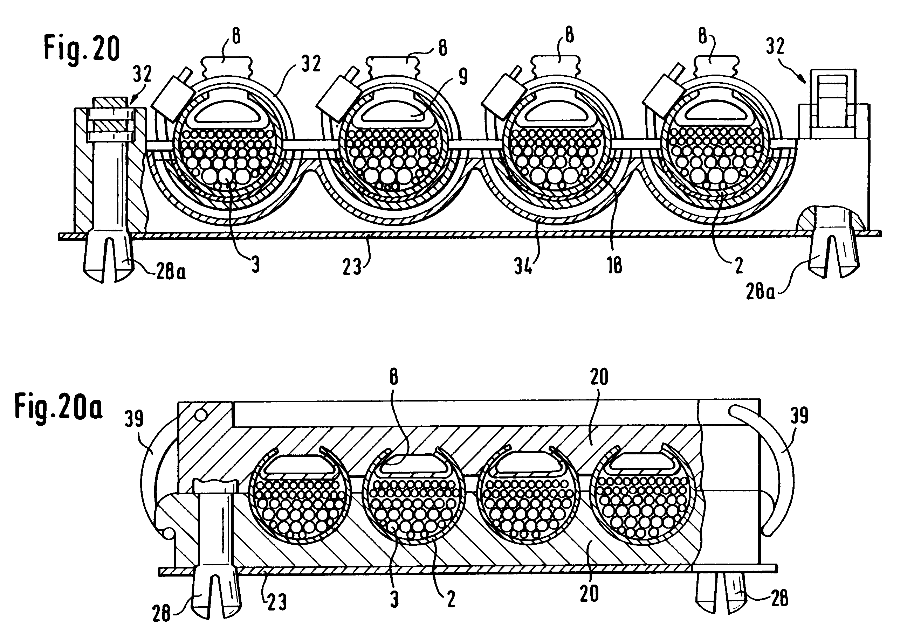

Die Figuren 19 und 20 zeigen Anordnungen, die von der Grundform nach Fig.3 und den bisher genannten modifizierten Anordnungen abweichen. So sind in der Fig.19 zwei Hohlprofildoppelanordnungen an einer Struktur 23 mittels Rohrschelle 17 und Schraubbefestigung in Position gehalten. Auf die Schelle 17 ist ein Gummiprofil 16 geschoben. Das Gummiprofil 16 weist ein Vorsprungelement 22 auf, das in die Öffnung des Hohlprofiles 2 hineinragt. Um Höhenunterschiede zwischen zwei Schellen 17 auszugleichen sind zusätzlich Distanzstücke 33 angeordnet.

Die Fig.20 zeigt eine Anordnung mit vier Hohlprofilen 2, die in unteren Halbschalen 18 der Halterung aufgenommen werden. Diese Halbschalen 18 sind in bogenförmigen Nuten 34 gelagert. Die Hohlprofile 2 sind mit Kabelbindern 32 befestigt. Im unteren Bereich der Halbschalen 18 befinden sich bogenförmige Einfädelnuten für die Kabelbinder 32, die von oben eingefädelt und durch diese Nut geführt sind. Die Stifte für die Spreizniete 28 sind in die Struktur 23 hineinzuschlagen, wodurch der Spreiznietstift 28a durch einen Kabelbinder 32 in Position gehalten wird und gleichzeitig gegen Erschütterung und Vibration sichert.

Die Fig.20a ist eine modifizierte Anordnung nach Fig.3, bei der die beiden Klemmteile 20 in der Nähe der äußeren Spreiznietbefestigung mittels einer metallenen und federnden Klippverriegelung 39 fixiert sind. Die Hohlprofile 2 sind in der beschriebenen Art und Weise in den Klemmteilen 20 aufgenommen und mittels der Spreiznietverbindung an der Struktur 23 befestigt.

Die Fig.24 zeigt eine modifizierte Anordnung nach Fig.3 mit der Anordnung nach Fig.5 und drei an einer Struktur 23 befestigten Klemmteile 20 mittels Spreiznietverbindung. Diese Anordnung sieht die Fixierung versetzt vertikal angeordneter Hohlprofile 2 mit je einem darunter gelagerten Hohlprofil 2 paarweise vor, damit die Einbaumöglichkeit der Übergangsstücke 12 an die horizontal unterhalb gelagerten Hohlprofile 2 gewährleistet ist.

In den Figuren 25, 25a, 26, 26a sind weitere Gestaltungsformen der freien Enden des offenen Hohlprofiles 2 dargestellt.

Fig.26 zeigt beispielsweise das offene Hohlprofil 2 mit I- förmiger Gestaltung seiner freien Enden und geflechtartiger Ummantelung der in diesem angeordneten gebündelten isolierten elektrischen Leitungen 3.

In der Fig.26a ist die C- förmige Gestaltung der freien Enden des offenen Hohlprofiles 2 vorgesehen.

Die Fig.25 verweist auf eine U- förmige und die Fig.25a auf eine V- angelehnte Gestaltung dieser freien Enden.

Eine Anzahl weiterer Modifizierungsmöglichkeiten des erfindungsgemäßen Leitungskanales bzw. deren Anordnung zu einem Leitungskanalsystem ist ferner in den Figuren 27, 29, 30, 33 und 34 dargestellt. Eine modifizierte Gestaltung mit separater Fixierung der einzelnen Hohlprofile 2 an einem durch das untere elektrisch leitfähige Klemmteil 20 durchgeführten Schweißbolzen 37 und Befestigung derselben mittels Spreizniet 28 an der Struktur 23 ist in der Massehalterung nach Fig.27 angegeben. Die Klemmteile 20 der Halterung 14 nach Fig.27 können aus einem Kunststoff bestehen, wobei die Hohlprofile 2 über die Schweißbolzen 37 mit der Struktur 23 elektrisch leitend verbunden sind. Dadurch wird eine Masseverbindung mit der Struktur 23 erzielt. Die aus einem Metall hier eingesetzten Distanzhülsen 33 verhindern, daß die Schweißstelle zwischen dem Hohlprofil 2 und dem Schweißbolzen 37 mechanisch beansprucht wird.

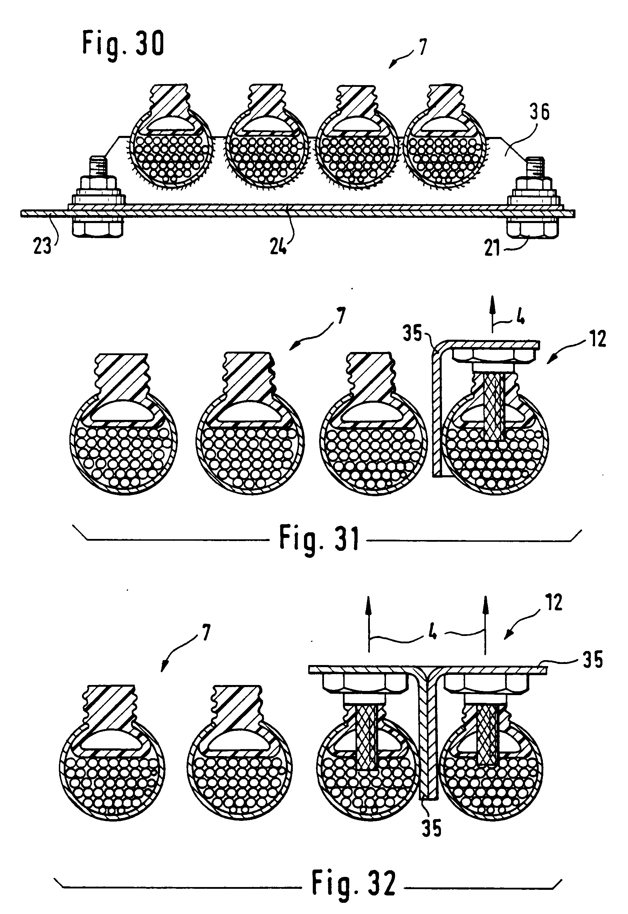

Die Fig.29 stellt eine separate Fixierung einer Mehrfachanordnung nach Fig.2 an einem geschweißten U- Profil und Befestigung desselben über Distanzstücke 33 mittels Spreiznietverbindung an einer Struktur 23 dar. Diese ist ohne diese Distanzstücke 33 in der Fig.30 sichtbar.

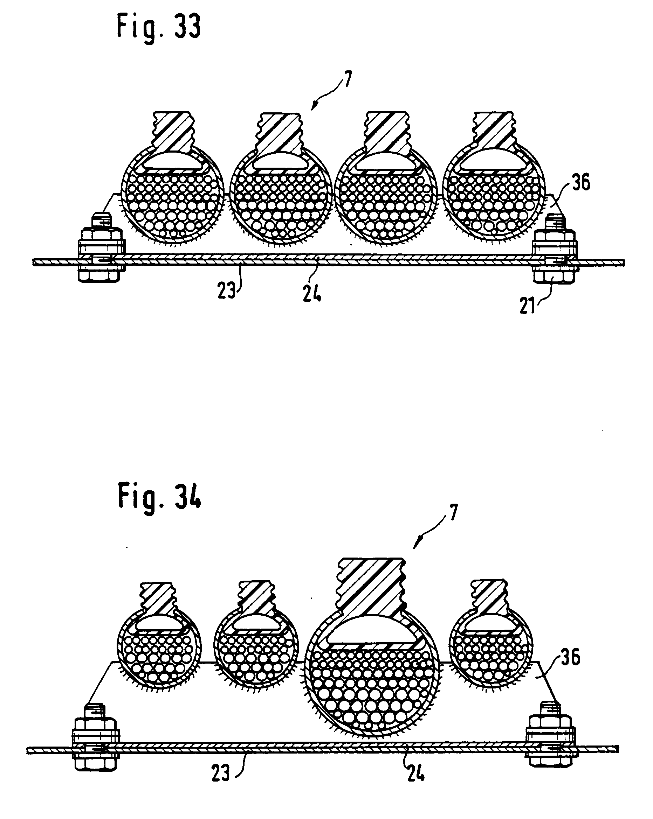

Die Fig.33 veräußert eine modifizierte Anordnung nach Fig.30 mit Schraubbefestigung an der Struktur 23. Mit der Fig.34 ist eine modifizierte Anordnung nach Fig.33 mit einem in horizontal querschnittsmäßig größeren Hohlprofil 2 vorgestellt.

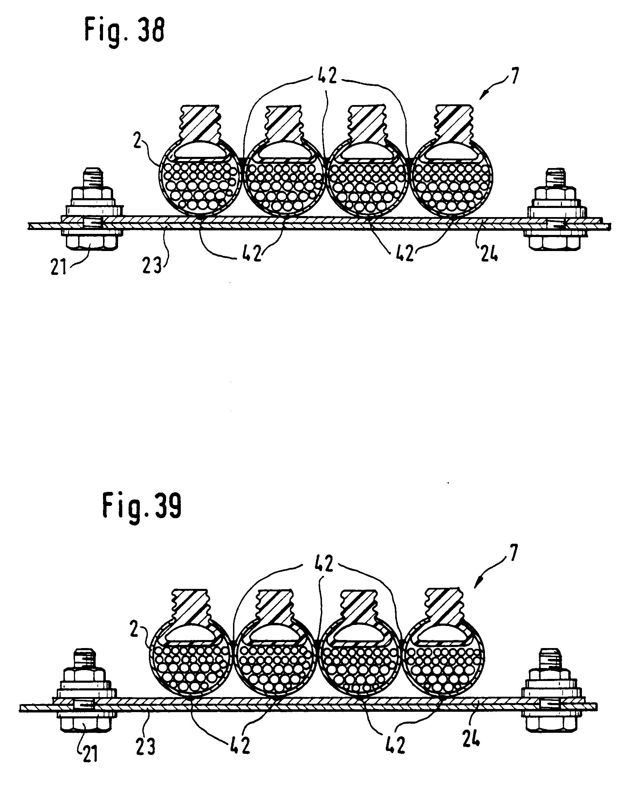

Die beiden Figuren 38 und 39 zeigen eine modifizierte Anordnung nach Fig.30 bzw. 33. Der Unterschied zu den Anordnungen der zuletzt genannten Figuren ist in der Befestigungsart der Hohlprofile 2 an der Struktur 23 und im Wegfall ihrer zusätzlichen Anordnung und Befestigung in einem zueinander definierten Abstand an einem U- Profil 36 zu erblicken. Diese Anordnugen sind mit den Außenwandungen 5 ihrer metallenen Hohlprofile 2 mittels einer Schweißverbindung 42 einmal am Flachprofil 24 und zum anderen gegenseitig befestigt und elektrisch leitfähig verbunden. Die gegenseitige Vebindung der Hohlprofile 2 geschieht entweder mit einer Punktschweißung oder mittels einer Kehlnaht. Die Befestigung am metallenen Flachprofil 24 ist mit einer Punktschweißverbindung realisiert.

Ergänzenderweise sei zu allen vorgestellten Anordnungen des Leitungskanales bzw. Leitungskanalsystems noch bemerkt, daß der Hohlraum der Halteleiste 8 die Zufuhr von Druckluft an den in Längsrichtung des Hohlprofiles 2 befindlichen Enden gestattet, wobei das eine Ende mit einem regelbaren Ventil auszurüsten ist. Der Hohlraum des Klemmprofiles 7 ist so aufgrund des erzeugten Innendruckes mit seinem maximalen Volumen ausgefüllt. Er übt mit der Druckluft eine optimale Niederhaltung auf die im Hohlprofil 2 befindlichen Leitungen 3 aus.

Anstatt der in Fig.12 gezeigten Zugentlastung 11 sind alle vorgestellten Halterungen in Kunststoffausführung einsetzbar, allerdings mit der Einschränkung, daß das Hohlprofil 2 zusätzlich mit Masseverbindern mit der Struktur 23 verbunden bzw. in die Schutzmaßnahme gegen elektrische Gefährdungen einbezogen ist. Alternativ wäre die Fixierung und Befestigung eines oder mehrerer Hohlprofile 2 mittels einer Metallschelle 17, die einen ausreichenden elektrischen Kontakt mit dem Hohlprofil 2 besitzt, und deren Anbindung mittels Masseband an die vorhandene aber leifähige Struktur 23 auch möglich. Des weiteren kann man diese Kunststoffhalterungen 13, 14 in geeigneter Form mit Metallteilen, die das Hohlprofil 2 elektrisch leifähig kontaktieren, versehen und diese an die leitfähige Struktur 23 anschließen. Denkbar sind auch Anordnungen, bei denen die gerade oder gewellte aber federnde Fächerkränzen am Umfang der eingespannten Hohlprofile 2 angeordnet sind,wobei die elektrische Verbindung dieser Federelemente mit der Struktur 23 mittels Schraubverbindung geschieht.

## Patentansprüche

1. Leitungskanal zur Verlegung von isolierten Leitungen in Luft- und Raumfahrzeugen, bei dem verschiedene Mittel zur Fixierung und Befestigung des Kanals (1) vorgesehen sind, der aus einem leitfähigen Material besteht und eine Masseverbindung vorgesehen ist, **dadurch gekennzeichnet**, daß der Kanal (1) einen Längsschlitz (6) aufweist, daß der Längsschlitz (6) durch ein Klemmprofil (7), das im Querschnitt aus einer an einem Hohlprofil (2) sich über die Gesamtlänge des Kanals (1) erstreckenden anliegenden Halteleiste (8) und einem in deren Querschnitt eingeschlossenen elastisch formbaren Füllkörper (9) besteht, wobei die Halteleiste (8) mit den freien Enden der Außenwandung (5) des offenen Querschnittes Klemmt, daß die Innenwandung (5) des Kanals (1) mit einem Scheuerschutz versehen ist, daß an den in Längsrichtung liegenden Enden des Kanals (1) mindestens ein Übergangsstück (12) und eine Zugentlastung (11) aufnehmbar ist, daß mindestens eine Massehalterung (13) der Zugentlastung (11) vorgeordnet ist und zwischen den Massehalterungen (13) ein oder mehrere Abstandhalter (14) angeordnet sind, daß das Übergangsstück (12) zur Aufnahme von elektrisch isolierten Leitungen (3) geeignet ist und in das Hohlprofil (2) hineinragt, daß die isolierten elektrischen Leitungen (3) separat in einem Schlauch (30), der vorzugsweise geflechtartig ist und einen zusätzlichen Scheuerschutz gewährt, geführt sind, daß mit dem Übergangsstück (12) die Masseverbindung (4) zu einem weiteren Schutzleitungssystem oder der Anschluß zu anderen elektrischen Systemen realisiert ist, daß bei den verschiedenen Mitteln zur Fixierung und Befestigung des Hohlprofiles (2) eine Aufnahme für einen Kabelbinder (32) vorgesehen und eine rohrförmige Schelle mit einem angepaßten Formteil, vorzugsweise mit dem Elastomereinsatz (16), angeordnet ist, daß mehrere Hohlprofile (2), die horizontal im definierten Abstand zueinander angeordnet sind, mit ihrer Außenwandung (5) an einem metallenen Flachprofil (24) und an ihren gemeinsamen außenwandigen Berührungspunkten mit einer Schweißverbindung (42) befestigt sind.

2. Leitungskanal nach Anspruch 1, **dadurch gekennzeichnet**, daß die offenen Enden des Hohlprofiles (2) durch ein leitfähiges Profil (25), das eine dünne Wandung besitzt und über ein elastisches Formänderungsvermögen verfügt, geschlossen sind, wobei das leitfähige Profil (25) ein C- förmiges Flachprofil mit ein oder mehrere Rillen (27), die mit den rillenartigen Vertiefungen (26) der Seitenflächen der Halteleiste (8) deckungsgleich sind und sich diesen anschmiegen, ist, das sich der Form der Halteleiste (8) anpaßt und mit dem eingesetzten Material des Hohlprofiles (2) übereinstimmt und mit der Halteleiste (8) und dem Hohlprofil (2) elektrisch leitfähig kontaktiert.

3. Leitungskanal nach Anspruch 1, **dadurch gekennzeichnet**, daß das Hohlprofil (2) aus einem oberflächenbehandelten Blech mit verchromter oder verzinkter oder verkadmierter oder vernickelter oder versilberter oder vergoldeter Oberfläche oder aus einer Kupfer- oder Aluminiumlegierung oder aus einem anodisierten Aluminium oder einer anodisierten Aluminiumlegierung realisiert ist.

4. Leitungskanal nach Anspruch 1, **dadurch gekennzeichnet**, daß das Klemmprofil (7) als leitfähige Kunststoff- Metall- Kombination oder aus einem leitfähigen Gummimaterial, denen leitfähige Partikel, vorzugsweise Gold oder Silber oder Kupfer oder Aluminium oder Nickel oder Eisen, zugesetzt sind, realisierbar ist, wobei die Oberfläche des Klemmprofiles (7) mit einer leitfähigen Schicht aus Gold oder Silber oder Kupfer oder Kobald oder Chrom oder Indium oder Rhodium oder Tellur oder Tantal oder Chrom- Nickel oder Eisen- Nickel überzogen ist.

5. Leitungskanal nach Anspruch 1, **dadurch gekennzeichnet**, daß die Halteleiste (8) mit ihren Seitenflächen, die rillenartige, vorzugsweise längsverlaufende, Vertiefungen (26) aufweist, an der Innenwandung (5) des Hohlprofiles (2) anliegend ist, wobei sie quer verlaufenden Durchbrüche aufweist und aus einem elektrisch leitfähigen Kunststoff oder Gummi besteht, der wenigstens an seiner Oberfläche elektrisch leitfähig ist.

6. Leitungskanal nach Anspruch 1, **dadurch gekennzeichnet**, daß der Füllkörper (9), der aus Schaum- oder Moosgummi oder Kunststoff besteht, als Voll- oder Hohlquerschnitt ausgebildet ist, wobei er den Raum in der Halteleiste (8) ausfüllt und mit letzterer bei deren Anpassung an die innere Wandung (5) des Hohlprofiles (2) die isolierten elektrischen Leitungen (3) im Hohlprofil (2) fixiert.

7. Leitungskanal nach Anspruch 1, **dadurch gekennzeichnet**, daß der Scheuerschutz durch eine in das Hohlprofil (2) einsetzbare Auskleidung, die aus einer Kunststoffbeschichtung oder einer gummielastischen Beschichtung oder einer gewebeartigen Beschichtung besteht, realisiert ist.

8. Leitungskanal nach Anspruch 1, **dadurch gekennzeichnet**, daß das Übergangsstück (12) aus zwei verschiedenen Klemmteilen (20) aus einem Eisen- oder Eisengußwerkstoff oder aus einem Bunt- oder Leichtmetall oder aus einem leit- oder nichtleitfähigen Kunststoff besteht, die beide eine Aufnahme für das Hohlprofil (2) aufweisen und mit einer Schraubverbindung (21) fixiert sind, wobei das obere Klemmteil (20) ein Vorsprungelement (22) aufweist, das in die Öffnung des Hohlprofiles (2) hineinragt und am oberen Klemmteil (20) ein Haltewinkel (19) angeformt ist, der zur Befestigung der Durchführung des weiteren Schutzleitungssystems oder des anderen elektrischen Systems vorgesehen ist.

9. Leitungskanal nach Anspruch 1, **dadurch gekennzeichnet**, daß die Zugentlastung (11) aus einer Stützbuchse, die aus einer oberen Halbschale (15) und einer unteren Halbschale (18) aus einem metallischen Werkstoff besteht und eine leitfähige Verbindung mit dem Hohlprofil (2) besitzt, einem Elastomereinsatz (16), der aus einer Gummimuffe besteht, und einem Spannelement (17), das aus einer vorzugsweise rohrförmig geformten und durch eine Schraubverbindung (21) befestigten Schelle besteht, zusammengesetzt ist, wobei der Elastomereinsatz (16) die mit dem Schlauch (30) ummantelten isolierten elektrischen Leitungen (3) umgibt und diese Anordnung in die Stützbuchse eingeführt und mittels des Spannelementes (17) am Hohlprofil (2) fixiert und befestigt ist.

10. Leitungskanal nach Anspruch 1, **dadurch gekennzeichnet**, daß die Massehalterung (13) jeweils aus mindestens zwei Klemmteilen (20) und der Abstandhalter (14) jeweils aus zwei Klemmteilen (20) besteht, wobei die Massehalterung (13) aus einem Eisen- oder Eisengußwerkstoff oder aus einem Bunt- oder Leichtmetall oder aus einem leitfähigen Kunststoff und der Abstandhalter (14) aus einem Kunststoff realisiert sind.

## Claims

1. Conducting channel for the installation of insulated wires in aircraft and spacecraft, with which various means are provided for fixing and securing the channel (1) which consists of a conductive material and an earth connection is provided, characterised in that the channel (1) has a longitudinal slot (6), in that the longitudinal slot (6) by means of a clamping section (7) which in cross-section consists of a retaining strip (8) that is adjacent to a hollow section (2) and extends over the entire length of the channel (1) and an elastically mouldable filler (9) included within the cross-section of said retaining strip, whereby the retaining strip (8) brings about a clamping effect together with the free ends of the exterior wall (5) of the open cross-section, in that the interior wall (5) of the channel (1) is provided with protection against abrasion, in that at least one transition piece (12) and a tension-relieving device (11) are capable of being accommodated at the ends of the channel (1) located in the longitudinal direction, in that at least one earth holder (13) is arranged in front of the tension-relieving device (11) and one or several spacers (14) are arranged between the earth holders (13), in that the transition piece (12) is suitable for receiving electrically insulated wires (3) and protrudes into the hollow section (2), in that the insulated electrical wires (3) are guided separately in a hose (30) which is preferably of braided type and grants additional protection against abrasion, in that the earth connection (4) to an additional protective conductor system or the connection to other electrical systems is brought about with the transition piece (12), in that with the various means for fixing and securing the hollow section (2) a receptacle for a cable binder (32) is provided and a tubular clip is arranged with an adapted moulded part, preferably with the elastomer insert (16), in that several hollow sections (2) which are arranged horizontally with a defined spacing from one another are secured by their exterior wall (5) to a metal flat section (24) and are secured at their common exterior-wall contact points with a welded joint (42).

2. Conducting channel according to Claim 1, characterised in that the open ends of the hollow section (2) are closed by means of a conductive section (25) that has a thin wall and elastic deformability, whereby the conductive section (25) is a C-shaped flat section with one or several grooves (27) which coincide with the groove-like recesses (26) of the lateral faces of the retaining strip (8) and which press close to the latter, whereby said flat section adapts to the shape of the retaining strip (8) and corresponds to the material of the hollow section (2) employed and comes into contact with the retaining strip (8) and the hollow section (2) in electrically conductive manner.

3. Conducting channel according to Claim 1, characterised in that the hollow section (2) is produced from a surface-treated metal sheet with a chromium-plated or zinc-plated or cadmium-plated or nickel-plated or silver-plated or gold-plated surface or from a copper or aluminium alloy or from an anodised aluminium or an anodised aluminium alloy.

4. Conducting channel according to Claim 1, characterised in that the clamping section (7) can be produced as a conductive plastic-metal combination or from a conductive rubber material to which conductive particles, preferably gold or silver or copper or aluminium or nickel or iron, are added, whereby the surface of the clamping section (7) is coated with a conductive layer of gold or silver or copper or cobalt or chromium or indium or rhodium or tellurium or tantalum or chromium-nickel or iron-nickel.

5. Conducting channel according to Claim 1, characterised in that the retaining strip (8) with its lateral faces, which has groove-like, preferably longitudinal recesses (26), is adjacent to the interior wall (5) of the hollow section (2), whereby it has apertures extending obliquely and consists of an electrically conductive synthetic material or rubber which is electrically conductive at least on its surface.

6. Conducting channel according to Claim 1, characterised in that the filler (9), which consists of foam rubber or sponge rubber or synthetic material, is designed as a solid or hollow cross-section, whereby it fills the space in the retaining strip (8) and together with the latter in the case of the adaptation thereof to the interior wall (5) of the hollow section (2) fixes the insulated electrical wires (3) in the hollow section (2).

7. Conducting channel according to Claim 1, characterised in that the protection against abrasion is achieved by means of a lining that is capable of being inserted into the hollow section (2) and consists of a plastic covering or a rubber-elastic covering or a fabric-type covering.

8. Conducting channel according to Claim 1, characterised in that the transition piece (12) consists of two different clamping parts (20) made of an iron or cast-iron material or of a non-ferrous metal or light metal or of a conductive or non-conductive synthetic material which both have a receptacle for the hollow section (2) and are fixed with a screw connection (21), whereby the upper clamping part (20) has a projecting element (22) which protrudes into the opening of the hollow section (2) and on the upper clamping part (20) there is moulded a retaining bracket (19) which is provided for securing the conduit of the additional protective conductor system or of the other electrical system.

9. Conducting channel according to Claim 1, characterised in that the tension-relieving device (11) is composed of a support bush that consists of an upper half-shell (15) and a lower half-shell (18) made of a metallic material and has a conductive connection to the hollow section (2), an elastomer insert (16) that consists of a rubber sleeve and a tensioning element (17) consisting preferably of a tubular clip attached by means of a screw connection (21), whereby the elastomer insert (16) surrounds the insulated electrical wires (3) encased by the hose (30) and this arrangement is introduced into the support bush and is fixed and attached to the hollow section (2) by means of the tensioning element (17).

10. Conducting channel according to Claim 1, characterised in that the earth holder (13) consists in each case of at least two clamping parts (20) and the spacer (14) consists in each case of two clamping parts (20), whereby the earth holder (13) is produced from an iron or cast-iron material or from a non-ferrous metal or light metal or from a conductive synthetic material and the spacer (14) is produced from a synthetic material.

## Revendications

1. Gaine de câble destinée à la pose de conduites isolées dans des aéronefs et dans des astronefs dans le cas de laquelle différents moyens sont prévus pour la fixation et la stabilisation de la gaine (1), ladite gaine étant composée à partir d'un matériau conducteur et étant pourvue d'une borne de mise à la masse,
caractérisée en ce que la gaine (1) présente une fente longitudinale (6), en ce que la fente longitudinale (6) est traversée par un profilé de serrage (7) dont la section transversale se compose d'une barre d'arrêt (8) s'appuyant sur un profilé creux (2) et s'étendant sur toute la longueur de la gaine (1) ainsi que d'un corps de remplissage (9) compris dans la section transversale et pouvant être déformé élastiquement, ladite barre d'arrêt (8) étant bloquée par les extrémités libres de la paroi externe (5) de la section transversale ouverte, en ce que la paroi interne (5) de la gaine (1) est pourvue d'une protection contre l'abrasion, en ce que sur les extrémités de la gaine (1) placées dans le sens longitudinal peuvent être maintenus au moins un raccord (12) et une décharge de traction (11), en ce que au moins une borne de mise à la masse (13) est placée en amont de la décharge de traction (11) et une ou plusieurs entretoises (14) sont disposées entre les bornes de mise à la masse (13), en ce que le raccord (12) est approprié pour la réception de conduites (3) isolées et fait saillie à l'intérieur du profilé creux (2), en ce que les conduites (3) isolées sont introduites séparément dans un tuyau (30) de préférence tressé et présente une protection supplémentaire contre l'abrasion, en ce que une mise à la masse à un autre système de protection de conduites ou la connexion à d'autres systèmes électriques est réalisée au moyen des raccords (12), en ce que dans le cas des différents moyens de fixation et de stabilisation du profilé creux (2) est prévu un logement pour un raccord de câble (32) de même qu'une bride de serrage tubulaire adaptée de préférence à la forme de l'insert élastomère (16), en ce que plusieurs profilés creux (2), disposés horizontalement à une distance déterminée l'un de l'autre, sont fixés par leur paroi externe (5) sur un profilé plat (24) métallique et fixés par soudure (42) à leur point de contact commun sur leur paroi externe.

2. Gaine selon la revendication 1, caractérisée en ce que les extrémités ouvertes du profilé creux (2) sont fermées par un profilé (25) conducteur pourvu d'une mince paroi et doté d'une capacité de déformation élastique, ledit profilé (25) conducteur étant un profilé droit en forme de C pourvu de un ou plusieurs sillons (27) coïncidant avec les creux en forme de sillons (26) des surfaces latérales de la barre d'arrêt (8) et épousant la forme de ceux-ci, ledit profilé (25) étant adapté à la forme de la barre d'arrêt (8), de même qu'il concorde avec le matériau introduit du profilé creux (2) et qu'il entre en contact avec la barre d'arrêt (8) et le profilé creux (2) par électroconduction.

3. Gaine selon la revendication 1, caractérisée en ce que le profilé creux (2) est fabriqué à partir d'une tôle recouverte de chrome, de zinc, de cadmium, de nickel, d'argent ou d'or, ou également à partir d'un alliage de cuivre ou d'aluminium, à partir d'aluminium anodisé ou d'un alliage d'aluminium anodisé.

4. Gaine selon la revendication 1, caractérisée en ce que le profilé de serrage (7) peut être conçu comme une combinaison conductrice de plastique et de métal ou à partir d'un matériau conducteur en caoutchouc auquel des particules conductrices, de préférence l'or, l'argent, le cuivre, l'aluminium, le nickel ou le fer sont ajoutées, la surface du profilé (7) étant recouverte d'une couche conductrice d'or, d'argent, de cuivre, de cobalt, de chrome, d'indium, de rhodium, de tellure, de tantale, d'un alliage de chrome et de nickel ou d'un alliage de fer et de nickel.

5. Gaine selon la revendication 1, caractérisée en ce que la barre d'arrêt (8) repose, par ses surfaces latérales présentant des creux (26) en forme de sillons et orientés de préférence dans le sens longitudinal, sur la paroi interne (5) du profilé creux (2) ladite barre d'arrêt présentant des brèches transversales et étant composée de plastique ou de caoutchouc électroconducteur dont au moins la surface est électroconductrice.

6. Gaine selon la revendication 1, caractérisée en ce que le corps de remplissage (9), qui se compose de caoutchouc mousse, de caoutchouc cellulaire ou de plastique, est conçu comme une section pleine ou comme une section creuse, ledit corps de remplissage comblant l'espace dans la barre d'arrêt (8), grâce à ladite barre d'arrêt lors de son adaptation sur la paroi interne (5) du profilé creux (2), les conduites (3) isolées dans le profilé creux (2).

7. Gaine selon la revendication 1, caractérisée en ce que la protection contre l'érosion est réalisée par un revêtement pouvant être placé dans le profilé creux (2) et composé de plastique, de caoutchouc élastique ou d'un tissage.

8. Gaine selon la revendication 1, caractérisée en ce que le raccord (12) se compose de deux éléments de serrage (20) fabriqués à partir de produits ferreux, de fonte de fer, de métal lourd non-ferreux, de métal léger, de plastique conducteur ou de plastique non-conducteur, les deux éléments de serrage présentant un logement pour le profilé creux (2) et étant fixés au moyen d'un assemblage par vis (21), I'élément de serrage supérieur (20) présentant une partie saillante (22) faisant saillie à l'intérieur de l'ouverture du profilé creux (2) et un support angulaire (19) étant formé sur l'élément de serrage supérieur (20), ledit support étant prévu pour la fixation du passage du système de conduite de protection ou d'un autre système électrique.

9. Gaine selon la revendication 1, caractérisée en ce que la décharge de traction (11) est composée d'une douille d'appui, formée d'une demi-coque (15) supérieure et d'une demi-coque (18) inférieure en métal et comprenant un raccord conducteur avec le profilé creux (2), d'un insert élastomère (16) composé d'un manchon en caoutchouc, d'un élément de serrage (17) formé d'une bride de fixation de préférence tubulaire et fixée par un assemblage par vis (21), l'élastomère (16) entourant les conduites (3) isolées contre l'électricité et recouvertes par le tuyau (30), l'assemblage étant introduit dans le support et fixé et stabilisé au moyen d'un élément de serrage (17) sur le profilé creux (2).

10. Gaine selon la revendication 1, caractérisée en ce que la borne de mise à la masse (13) se compose d'au moins deux éléments de serrage (20) et l'entretoise (14) se compose de deux éléments de serrage (20), la borne de mise à la masse (13) étant fabriquée à partir de produits ferreux, de fonte de fer, de métal lourd non-ferreux, de métal léger ou de plastique conducteur et l'entretoise (14) étant fabriquée à partir de plastique.
